# EUROPEAN PATENT APPLICATION

(11) **EP 4 403 981 A1**
(43) Date of publication of application: **24.07.2024**
(21) Application number: 22886009.4
(22) Date of filing: 26.10.2022
(51) Int. Cl.: G02B 27/64, H04N 23/68

(54) **OPTICAL ANTI-SHAKE UNIT, CAMERA MODULE, AND ELECTRONIC DEVICE**

(30) Priority: 30.10.2021 CN 202111278481
(71) Applicant: Huawei Technologies Co., Ltd., Shenzhen, Guangdong 518129 (CN)
(72) Inventor: PAO, Chu-Peng, Shenzhen, Guangdong 518129 (CN); PENG, Shusheng, Shenzhen, Guangdong 518129 (CN); KUO, Li-Te, Shenzhen, Guangdong 518129 (CN)
(74) Representative: Thun, Clemens
(86) International application number: PCT/CN2022/127622
(87) International publication number: WO 2023/072133

(57) **Abstract**

This application discloses an optical image stabilization apparatus, a camera module, and an electronic device. The optical image stabilization apparatus includes an image sensor, a drive assembly, a first connection member, and a second connection member that are fastened in sequence. The first connection member includes a first connection part, a second connection part, and a first elastic part. The first connection part is configured to enable the first connection part and the second connection part to move relative to each other in a first direction. The second connection member includes a third connection part, a fourth connection part, and a second elastic part. The second elastic part is configured to enable the third connection part and the fourth connection part to move relative to each other in a second direction. The second connection member and the first connection member are stacked. The drive assembly cooperates with the first connection member and the second connection member to drive the image sensor to move relative to the first direction and the second direction. The first elastic part and the second elastic part are separately disposed on the first connection member and the second connection member that are stacked, so that the optical image stabilization apparatus can efficiently and accurately compensate for shakes of the electronic device, and a size of the optical image stabilization apparatus is smaller.

## Description

This application claims priority to Chinese Patent Application No. 202111278481.9, filed with the China National Intellectual Property Administration on October 30, 2021 and entitled "OPTICAL IMAGE STABILIZATION APPARATUS, CAMERA MODULE, AND ELECTRONIC DEVICE", which is incorporated herein by reference in its entirety.

### TECHNICAL FIELD

Embodiments of this application relate to the field of photographing technologies, and in particular, to an optical image stabilization apparatus, a camera module, and an electronic device.

### BACKGROUND

When an electronic device (for example, a mobile phone or a tablet computer) with a photographing function performs photographing, a shot photo often becomes blurry, ghosted, or blurred due to slight shakes. For example, when a human body holds an object, physiological shakes to some extents are common, and the human body is usually in a moving state during image shooting. These irregular and non-autonomous shakes or motion vibrations cause blurring of a shot picture, and user experience is poor. Therefore, the electronic device with a photographing function needs to have an automatic focus (Automatic Focus, AF for short) function and an optical image stabilization (Optical image stabilization, OIS for short) function.

In development trends of lightness, thinness, and multi-function of the electronic device, in a design process of a camera module, how to design an optical image stabilization apparatus with a smaller size to implement miniaturization of the camera module when the optical image stabilization apparatus can efficiently and accurately compensate for and correct shakes of the electronic device is a subject that is continuously explored in the industry.

### SUMMARY

This application provides an optical image stabilization apparatus, a camera module, and an electronic device. The optical image stabilization apparatus can efficiently and accurately compensate for and correct shakes of the electronic device, and has a smaller size, to meet a design requirement of the camera module for miniaturization.

According to a first aspect, an embodiment of this application provides an optical image stabilization apparatus, including an image sensor, a drive assembly, a first connection member, and a second connection member. The drive assembly includes a fastening member and a movable member that are capable of moving relative to each other, where the movable member is fastened to the image sensor, the fastening member and the movable member cooperate to drive the image sensor to move in a first direction and a second direction, and the first direction and the second direction are disposed in an included angle. The first connection member includes a first connection part, a second connection part, and a first elastic part, where the first elastic part is connected between the first connection part and the second connection part, the first elastic part is configured to implement relative movement between the first connection part and the second connection part in the first direction, and the first connection part is fastened to the movable member. The second connection member and the first connection member are stacked, where the second connection member includes a third connection part, a fourth connection part, and a second elastic part, the second elastic part is connected between the third connection part and the fourth connection part, the second elastic part is configured to implement relative movement between the third connection part and the fourth connection part in the second direction, the third connection part is relatively fastened to the fastening member, and the fourth connection part is fastened to the second connection part.

The first elastic part is disposed in the first connection member, so that the first connection part and the second connection part can move relative to each other in the first direction. The second elastic part is disposed in the second connection member, so that the third connection part and the fourth connection part can move relative to each other in the second direction. In this embodiment of this application, the first connection member and the second connection member that are stacked are connected between the fastening member and the movable member that are of the drive assembly, so that a force transmission mechanism for driving the image sensor to move in the first direction and the second direction by the drive assembly is implemented. Because the first connection member and the second connection member are stacked, the first elastic part of the first connection member is responsible for elastic deformation in a movement process in the first direction, and the second elastic part of the second connection member is responsible for elastic deformation in a movement process in the second direction. In this application, in a limited space, the first connection member and the second connection member have long force arms in both the first direction and the second direction, and a force of the drive assembly can achieve a large torque by using the first connection member and the second connection member, thereby implementing efficient and accurate position compensation and correction of the image sensor.

If the first elastic part and the second elastic part are disposed on a same plate-shaped structure (or a same plane), lengths of the first elastic part and the second elastic part are inevitably limited. If the first elastic part and the second elastic part are set to be long enough, the plate-shaped structure definitely needs to be set to be large enough. In this way, sizes of the optical image stabilization apparatus and the camera module are very large, which is not conducive to development of size miniaturization. It may be understood that both the first connection member and the second connection member provided in this application are plate-shaped structures. The first connection member and the second connection member are stacked, and sizes of the first connection member and the second connection member (which are areas of the plate-type first connection member and the plate-type second connection member) are fixed. Because the first elastic part and the second elastic part are disposed on two different planes (or plates) that are stacked, and a size of the first elastic part in the second direction and a size of the second elastic part in the first direction have a large design space and can be maximized, a force arm is longer, and an output torque is larger. This helps move the image sensor to a required position, to efficiently and accurately compensate for and correct shakes of the electronic device. In addition, when a torque that needs to be output is fixed, the foregoing structure may make the size of the optical image stabilization apparatus smaller, thereby meeting a design requirement of the camera module for miniaturization.

In a possible implementation, a connection relationship between the first connection part and the second connection part in the second direction is a rigid connection. To be specific, when the drive assembly drives the image sensor to move in the second direction, the first connection part and the second connection part move synchronously, and there is no relative movement relationship between the first connection part and the second connection part. It may be understood that an elastic deformation direction of the first elastic part is only the first direction, and in the second direction, the first elastic part does not have an elastic deformation capability. This solution helps prevent crosstalk caused by movement of the image sensor in the first direction and the second direction, and can improve movement precision of the image sensor.

In a possible implementation, a connection relationship between the third connection part and the fourth connection part in the first direction is a rigid connection. To be specific, when the drive assembly drives the image sensor to move in the first direction, the third connection part and the fourth connection part move synchronously, and there is no relative movement relationship between the third connection part and the fourth connection part. It may be understood that an elastic deformation direction of the second elastic part is only the second direction, and in the first direction, the second elastic part does not have an elastic deformation capability. This solution helps prevent crosstalk caused by movement of the image sensor in the first direction and the second direction, and can improve movement precision of the image sensor.

In a possible implementation, a movement plane formed by the first direction and the second direction is parallel to a photosensitive surface of the image sensor (which may also be understood as parallel to an imaging surface of the image sensor), or a plane in which the first connection member and the second connection member are located is parallel to a photosensitive surface (or an imaging surface) of the image sensor. This solution helps to prevent a crosstalk problem caused by movement in another direction in movement processes of the image sensor in the first direction and the second direction. If the movement plane formed by the first direction and the second direction is tilted relative to the photosensitive surface of the image sensor, the image sensor rotates or swings. Therefore, in this solution, movement precision of the image sensor can be improved.

In a possible implementation, the first connection part is located on a periphery of the second connection part, and the third connection part is located on a periphery of the fourth connection part. It may be understood that the second connection part is located in a middle region of the first connection member, and the fourth connection part is located in a middle region of the second connection member. In this implementation, the middle regions of the first connection member and the second connection member are fastened, an edge position (the first connection part) of the first connection member is fastened to the movable member, and an edge position (the third connection part) of the second connection member is fastened to the fastening member. In other words, a joint between the first connection member and the drive assembly and a joint between the second connection member and the drive assembly are at peripheral edge positions, and a size of the peripheral edge position is larger than that of the middle region. Therefore, fastened connection reliability can be improved. Specifically, the first connection part and the second connection part are disposed at a same layer, and the third connection part and the fourth connection part are disposed at a same layer. In addition to implementing that the first connection part and the second connection part move relative to each other in the first direction and the third connection part and the fourth connection part move relative to each other in the second direction, this further helps reduce sizes of the first connection member and the second connection member that are perpendicular to the first direction and the second direction, and reduce the size of the optical image stabilization apparatus.

In a possible implementation, the second connection part is located on a periphery of the first connection part, and the fourth connection part is located on a periphery of the third connection part. In this solution, the first connection part is located in a middle region of the first connection member, the third connection part is located in a middle region of the second connection member, and peripheral regions (which may also be edge positions) of the first connection member and the second connection member are fastened, the middle region of the first connection member is fastened to the movable member, and the middle region of the second connection member is fastened to the fastening member. This solution provides a fastened connection solution, so that the first connection member and the second connection member can also be fastened between the movable member and the fastening member.

In a possible implementation, the first elastic part includes at least one first spring wire, the first spring wire includes a first end connected to the first connection part, a second end connected to the second connection part, and a first body connected between the first end and the second end, the first body is disposed and spaced from both the first connection part and the second connection part through gaps, and an extension distance of the first body in the second direction is greater than or equal to an extension distance of the image sensor in the second direction. The first elastic part is disposed as a spring wire, so that relative motion between the first connection part and the second connection part can be implemented through elastic deformation of the spring wire. The first spring wire is disposed and spaced from the first connection part and the second connection part, so that friction resistance and friction damage caused by contact between the first connection part and the second connection part when the first connection part and the second connection part move relative to each other can be avoided. In addition, an electrical signal can be transmitted to the second connection part through the first connection part and the first elastic part in sequence, so that a short circuit in a transmission process of the electrical signal is avoided. The extension distance of the first body in the second direction is greater than or equal to the extension distance of the image sensor in the second direction, so that when the size of the first connection member in the second direction is fixed, a size of the first body can be maximized, and further a force arm of the first elastic part in the first direction is longer. Therefore, the first elastic part has a larger elastic force in the first direction, a larger output torque, and higher driving efficiency.

In a possible implementation, there are a plurality of first spring wires, and the plurality of first spring wires are sequentially arranged at spacings between the first connection part and the second connection part. A quantity of the spring wires is increased, so that electric traces can be better arranged. Assuming that there is one first spring wire, and a plurality of electric traces need to be arranged on the same first spring wire, a width of the first spring wire is increased, elasticity of the first spring wire is correspondingly reduced, and an elastic force is also reduced. The quantity of the first spring wires is increased, so that the electric traces can be better arranged, the width of the first spring wire can be reduced, and a deformation capability of the first spring wire can be increased, thereby ensuring an elastic deformation capability of the first elastic part. The plurality of first spring wires are disposed and spaced from the first connection part and the second connection part, so that friction resistance and friction damage caused by contact between the first connection part and the second connection part when the first connection part and the second connection part move relative to each other can be avoided. In addition, an electrical signal can be transmitted to the second connection part through the first connection part and the first elastic part in sequence, so that a short circuit in a transmission process of the electrical signal is avoided.

In a possible implementation, the first body includes a first segment and a second segment, the second segment is bent and extended relative to the first segment, the first end is an end part that is of the first segment and that is away from the second segment, the second end is an end part that is of the second segment and that is away from the first segment, and the first segment extends in the second direction. The first body is segmented into the first segment and the second segment that are bent and connected to each other, where the first segment is used for elastic deformation, and the second segment is used for fastening. This helps extend a length of the first spring wire in the first direction, and output a larger torque. Assuming that the first body includes only the first segment, the length of the first spring wire in the first direction is shortened, the force arm is shorter, and the output torque is correspondingly reduced.

In a possible implementation, the first body is in a straight strip shape and extends in the second direction, and two ends of the first body are respectively connected to the second connection part and the first connection part. The first elastic part is disposed in a straight strip shape. This helps ensure stability of a direction of an elastic force and ensure the direction of the force.

In a possible implementation, there are two first elastic parts, and the two first elastic parts are respectively disposed on two sides of the second connection part in the first direction. There are two first elastic parts, and the two first elastic parts are symmetrically disposed on the two sides of the second connection part, so that the second connection member is more balanced under force, and can move along a straight line. This helps control a movement distance of the second connection member, to accurately adjust the image sensor to a required position.

In a possible implementation, an outer edge of the second connection part includes a first edge, a second edge, a third edge, and a fourth edge that are connected in sequence and in a closed frame shape, the first edge and the second edge are disposed opposite to each other, and the third edge and the fourth edge are disposed opposite to each other. The first connection part includes a first connection plate and a second connection plate, the first connection plate is located on a periphery of the first edge and is disposed and spaced from the first edge through a gap, the second connection plate is located on a periphery of the third edge and is disposed and spaced from the third edge through a gap, one first elastic part is located on the periphery of the third edge and is connected between the second connection plate and the second connection part, and the other first elastic part is located on a periphery of the fourth edge and is connected between the first connection plate and the second connection part. The first connection part includes the first connection plate and the second connection plate, the first connection plate and the second connection plate are symmetrically disposed on the two sides of the second connection part, and the two sides of the second connection part are both subject to acting forces exerted by the first connection plate and the second connection plate, so that a state of force balance is always maintained in a motion process, and a motion track is not skewed. This helps accurately adjust a position of the image sensor.

In a possible implementation, a position at which the first elastic part is connected to the second connection part is a position that is on the third edge and that is adjacent to the first edge, and a position at which the other first elastic part is connected to the second connection part is a position that is on the fourth edge and that is adj acent to the second edge. A connection position between the first connection plate and the second connection part and a connection position between the second connection plate and the second connection part are symmetrically disposed, so that an acting force between the first connection plate and the second connection part and an acting force between the second connection plate and the second connection part are balanced, thereby avoiding tilt and offset of relative motion between the first connection part and the second connection part. This helps accurately adjust a position of the image sensor.

In a possible implementation, regions between the first connection plate and the second connection plate include a first region and a second region that are adjacently disposed in the first direction, the second connection part and the two first elastic parts are located in the first region, the second region is used to accommodate an optical element, and the optical element is configured to transmit incident light to the image sensor. The second region is disposed between the first connection plate and the second connection plate, so that an installation space is provided for the optical element, and a channel is provided for light to enter the image sensor.

In a possible implementation, the optical element is a light conversion component, and the optical element is configured to reflect the incident light to the image sensor. The light conversion component is disposed in the optical image stabilization apparatus, and the light conversion component may be configured to change an optical path of light, so that the light is perpendicularly emitted into the image sensor. This helps reduce a size of the camera module. The second region directly facing the image sensor is disposed in the first connection member, and the light conversion component is accommodated in the second region. Compared with a structure in which the light conversion component is disposed outside the optical image stabilization apparatus, this structure helps reduce a size of the optical image stabilization apparatus.

In a possible implementation, the second connection part includes a first connection body and a first extension part. There are two first extension parts. One first extension part is disposed at a position that is on the first edge and that is adjacent to the third edge and is connected to a first elastic sub-part. The other first extension part is disposed at a position that is on the second edge and that is adjacent to the fourth edge and is connected to a second elastic sub-part. In this solution, the first extension part is disposed to replace the second segment, so that the first elastic part and the second connection part can also be rigidly connected in the first direction, and a length of the first connection body is maximized in the second direction. Therefore, a torque of the first connection member is larger.

In a possible implementation, regions surrounded by the third connection part include a third region and a fourth region that are adjacently disposed in the first direction, the fourth connection part includes a second connection body and a second extension part, the second connection body and the second connection part are stacked and fastened, the second connection body is located in the third region, the second extension part is located in the fourth region, a part of the second elastic part is located in the third region, a part of the second elastic part is in the fourth region, and the fourth region and the second region are disposed opposite to each other in a stacking direction. The fourth region is disposed on the second connection member, and the fourth region and the second region are symmetrically disposed in the stacking direction, so that light can be emitted into the image sensor on a side that is of the second connection region and that faces backwards the first connection member. The extension part is disposed and connected to the second elastic part. This helps extend a length of the second elastic part in the first direction, and output a larger torque.

In a possible implementation, the second elastic part includes at least one second spring wire, the second spring wire includes a third end connected to the third connection part, a fourth end connected to the fourth connection part, and a second body connected between the third end and the fourth end, the second body is disposed and spaced from both the third connection part and the fourth connection part through gaps, and an extension distance of the second body in the first direction is greater than or equal to an extension distance of the image sensor in the first direction. The second elastic part is disposed as the spring wire, and the spring wire enables the extension distance of the second body in the first direction to be greater than or equal to the extension distance of a graphic sensor in the first direction, so that when a size of the second connection member in the first direction is fixed, a size of the second body can be maximized. Therefore, an elastic force of the second elastic part in the second direction is larger, and an output torque is also larger.

In a possible implementation, the second body includes a third segment and a fourth segment, the fourth segment is bent and extended relative to the third segment, the third end is an end part that is of the third segment and that is away from the fourth segment, the fourth end is an end part that is of the fourth segment and that is away from the third segment, and the third segment extends in the first direction. There are two second elastic parts. A fourth segment of one second elastic part is located in the third region and is connected to a corner position that is of the connection body and that is away from the extension part. A fourth segment of the other second elastic part is located in the fourth region and is connected to an end that is of the extension part and that is away from the connection body. The second body is disposed in segments, the third segment and the fourth segment are bent relative to each other, and the fourth segments of the first elastic part and the second elastic part are at two diagonal positions of the second connection member, so that a length of the third segment can be extended, a force arm of the second elastic part can be extended, a torque of the second connection member in the second direction can be increased, and action points of the force between the first connection part and the second connection part can be symmetrically located. This helps maintain balance and stability in movement processes of the first connection part and the second connection part.

In a possible implementation, the third connection part is an unclosed frame-shaped structure, the third connection part includes a notch, and in the first direction, the fourth region is located between the notch and the third region. The notch is designed on the third connection part, and the notch communicates with the fourth region, so that within a limited size range, a size of space that can be used to accommodate the optical element in the first direction is expanded. This facilitates installation of the optical element and facilitates miniaturization designing of the optical image stabilization apparatus.

In a possible implementation, both the first connection member and the second connection member are hollow frame structures, and a light-transmitting region is surrounded by the first connection member and the second connection member. The first connection part, the first elastic part, and the second connection part are located on a periphery of the light-transmitting region. The third connection part, the second elastic part, and the fourth connection part are located on the periphery of the light-transmitting region. The light-transmitting region is configured to accommodate the image sensor. The light-transmitting region is disposed in the middle regions of the first connection member and the second connection member to accommodate the image sensor, so that a channel is provided for light to enter the image sensor, and an installation space is further provided for the image sensor. This reduces a volume of the optical image stabilization apparatus.

In a possible implementation, both the first connection member and the second connection member are hollow frame structures, and a light-transmitting region is surrounded by the first connection member and the second connection member. The first connection part, the first elastic part, and the second connection part are located on a periphery of the light-transmitting region. The third connection part, the second elastic part, and the fourth connection part are located on the periphery of the light-transmitting region. The light-transmitting region is configured to accommodate an optical element, and the optical element is disposed on an incident optical path of the image sensor. The light-transmitting region is disposed in the middle regions of the first connection member and the second connection member to accommodate an optical element, so that an installation space of the optical element in the optical image stabilization apparatus is saved. This facilitates miniaturization designing of the optical image stabilization apparatus.

In a possible implementation, both the first connection member and the second connection member are hollow frame structures, and a light-transmitting region is surrounded by the first connection member and the second connection member. The first connection part, the first elastic part, and the second connection part are located on a periphery of the light-transmitting region. The third connection part, the second elastic part, and the fourth connection part are located on the periphery of the light-transmitting region. A space in the light-transmitting region is an optical path between the optical element and the image sensor. The light-transmitting region is disposed in the middle regions of the first connection member and the second connection member, so that a channel is provided for light to enter the image sensor.

In a possible implementation, the first connection member includes a first electric trace, and the first electric trace enables the first connection part, the first elastic part, and the second connection part to be electrically connected in sequence. The second connection member includes a second electric trace, and the second electric trace enables the fourth connection part, the second elastic part, and the third connection part to be electrically connected in sequence. The first connection part is electrically connected to the image sensor, the first electric trace is electrically connected to the second electric trace, and the third connection part is configured to be electrically connected to an external circuit board. The first electric trace is disposed on the first connection member, the second electric trace is disposed on the second connection member, the first electric trace is electrically connected to the second electric trace, and the first electric trace and the second electric trace are arranged, so that the image sensor is electrically connected to an external circuit. In this embodiment of this application, a structure of the electrical connection between the image sensor and the external circuit is integrated into the first connection member and the second connection member, so that the first connection member and the second connection member can be used for a linkage mechanism between the fastening member and the movable member, and have the first electric trace and the second electric trace that are connected in series to each other, to form a partial electrical connection path between the image sensor and the external circuit. This structure has two functions of elastic connection and electrical connection in the mechanism. This helps implement miniaturization designing of the camera module. In addition, the first connection member and the second connection member are rigid plate-shaped structures, and the first electric trace and the second electric trace are disposed on the rigid plate-shaped structures, to ensure stability and service lives of signals transmitted on the first electric trace and the second electric trace.

In a possible implementation, the first connection member includes a first substrate and a first line layer that are stacked, and the first electric trace is disposed at the first line layer. The second connection member includes a second substrate and a second line layer that are stacked, and the second electric trace is disposed at the second line layer. The first substrate and the second substrate are adjacently disposed and fastened. The first connection member and the second connection member are disposed as a structure in which a substrate and a line layer are stacked layer by layer. The substrate may be used to support and fasten. The line layer may be used to arrange electric traces to implement electrical connection. The first substrate and the second substrate are adjacently disposed and fastened, so that the first line layer and the second line layer can be separated from each other to avoid a short circuit.

In a possible implementation, the first substrate and the second substrate are provided with through holes, the through hole penetrates the first line layer and the second line layer, and a conductive structure is disposed in the through hole, so that the first connection member is electrically connected to the second connection member. When the first substrate and the second substrate are adjacently disposed and fastened, the first line layer and the second line layer are separated by the first substrate and the second substrate. The first substrate and the second substrate are provided with the through holes, and the conductive structure is disposed in the through hole, so that the first electric trace is electrically connected to the electric trace.

In a possible implementation, the first connection member includes a first substrate and a first line layer that are stacked, and the first electric trace is disposed at the first line layer. The second connection member includes a second substrate and a second line layer that are stacked, and the second electric trace is disposed at the second line layer. The first line layer and the second line layer are adjacently disposed and fastened. In this solution, the first line layer and the second line layer are adjacently disposed and fastened, and the first electric trace can be electrically connected to the second electric trace without drilling on the first substrate and the second substrate. This has a simple structure and is easy to manufacture.

In a possible implementation, a coil is disposed on the movable member, the fastening member is provided with a magnetic structure, the magnetic structure is disposed opposite to the coil, and the coil is powered on and cooperates with the magnetic structure, to drive the image sensor to move in the first direction or the second direction. In this solution, the magnetic structure is configured to provide a magnetic field. When a current flows into the coil, the coil generates a magnetic thrust under an action of the magnetic field to drive the image sensor to move in the first direction or the second direction. A moving direction, a moving distance, and the like of the image sensor can be controlled by controlling a magnitude and a direction of the current in the coil. A driving manner is simple and easy to control.

In a possible implementation, the movable member includes a drive board and a bent part, the coil is disposed on the drive board, the bent part is connected to a pair of oppositely disposed edge positions on the drive board, and the first connection member is fastened to an edge that is of the bent part and that is away from the drive board. The first connection member and the edge that is of the bent part and that is away from the drive board are fastened, so that a function of driving the first connection member by the movable member is implemented, and the bent part separates the first connection member from the drive part to avoid movement of the coil caused by contact between the first connection member and the coil.

In a possible implementation, the first connection member, the bent part, and the drive board are jointly enclosed to form an accommodation space, the fastening member is located in the accommodation space, and the second connection member is located on a side that is of the first connection member and that is away from the fastening member. A layout in the stacking direction in this solution helps reduce a thickness of the optical image stabilization apparatus, ensure a driving force provided by the drive assembly, and improve efficiency of driving the image sensor to move by the drive assembly.

In a possible implementation, the first connection member, the bent part, and the drive board are jointly enclosed to form an accommodation space, the second connection member is disposed in the accommodation space, and the fastening member is located on a side that is of the drive board and that is away from the second connection member. In this solution, the second connection member is disposed in the accommodation space, and the fastening member is located on the side that is of the drive board and that is away from the second connection member, so that a structure of the optical image stabilization apparatus is more compact, and an overall volume of the optical image stabilization apparatus is reduced.

According to a second aspect, this application provides a camera module, including a module frame, a lens assembly, and the optical image stabilization apparatus in any implementation of the first aspect. Both the lens and the optical image stabilization apparatus are installed in the module frame. In this solution, the optical image stabilization apparatus in the implementation of the first aspect is used in the camera module, so that the camera module can still implement clear imaging in a shake or vibration environment, and further has a miniaturization feature.

According to a third aspect, this application provides an electronic device, including a processor and the camera module in any implementation of the second aspect. The processor is electrically connected to the camera module, and the processor is configured to process an image signal output by an image sensor. The camera module in the second aspect is used in the electronic device, so that the electronic device has a higher-quality photographing function and is easier to implement miniaturization. This improves user experience and has higher competitiveness.

### BRIEF DESCRIPTION OF DRAWINGS

FIG. 1 is a schematic diagram of a structure of an electronic device in some embodiments according to an embodiment of this application;
FIG. 2 is a schematic diagram of a structure of the electronic device shown in FIG. 1 from another angle;
FIG. 3 is a schematic diagram of a structure of a camera module shown in FIG. 2 in Embodiment 1;
FIG. 4 is a schematic diagram of a structure obtained after the camera module shown in FIG. 3 is cut along A-A;
FIG. 5 is a schematic diagram of an overall structure of an optical image stabilization apparatus shown in FIG. 3;
FIG. 6 is a schematic diagram of an exploded structure of the optical image stabilization apparatus shown in FIG. 5;
FIG. 7 is a schematic diagram of a structure obtained after the optical image stabilization apparatus shown in FIG. 5 is cut along B-B;
FIG. 8 is a schematic diagram of a structure of a movable member shown in FIG. 6;
FIG. 9 is a schematic diagram of a structure of the first connection member shown in FIG. 6 in some embodiments;
FIG. 10 is a schematic diagram of a structure of the first connection member shown in FIG. 6 in another possible embodiment;
FIG. 11 is a schematic diagram of a structure of a second connection member shown in FIG. 6 in some embodiments;
FIG. 12 is a schematic diagram of a structure of the second connection member shown in FIG. 6 in some other embodiments;
FIG. 13 is a schematic diagram of a structure of the second connection member shown in FIG. 6 in some other embodiments;
FIG. 14 is a schematic diagram of a connection structure of the optical image stabilization apparatus shown in FIG. 6;
FIG. 15 is a schematic diagram of a layer structure of a first connection member and a second connection member shown in FIG. 6 in some embodiments;
FIG. 16 is a schematic diagram of a connection structure of a first connection member and a second connection member shown in FIG. 6 in some other embodiments;
FIG. 17 is a schematic diagram of a connection structure of a first connection member and a second connection member shown in FIG. 6 in some other embodiments;
FIG. 18 is a schematic diagram of a partial structure of the optical image stabilization apparatus shown in FIG. 6 in some other embodiments;
FIG. 19 is a schematic diagram of a structure of the camera module shown in FIG. 2 in Embodiment 2;
FIG. 20 is a schematic diagram of an exploded structure of the camera module shown in FIG. 19;
FIG. 21 is a schematic diagram of a structure obtained after the camera module shown in FIG. 19 is cut along C-C;
FIG. 22 is a schematic diagram of an overall structure of an optical image stabilization apparatus shown in FIG. 20;
FIG. 23 is a schematic diagram of an exploded structure of the optical image stabilization apparatus shown in FIG. 22;
FIG. 24 is a schematic diagram of a partial structure of the optical image stabilization apparatus shown in FIG. 23 in some embodiments;
FIG. 25 is a schematic diagram of a partial structure of the optical image stabilization apparatus shown in FIG. 23 in some other embodiments;
FIG. 26 is a schematic diagram of a partial structure of the optical image stabilization apparatus shown in FIG. 23 in some other embodiments;
FIG. 27 is a schematic diagram of a structure of a movable member shown in FIG. 23 in some embodiments;
FIG. 28 is a schematic diagram of a structure of the first connection member shown in FIG. 23 in some embodiments;
FIG. 29 is a schematic diagram of a structure of the first connection member shown in FIG. 23 in some other embodiments;
FIG. 30 is a schematic diagram of a structure of the first connection member shown in FIG. 23 in some other embodiments;
FIG. 31 is a schematic diagram of a structure of a second connection member shown in FIG. 23 in some embodiments;
FIG. 32 is a schematic diagram of a structure obtained after the optical image stabilization apparatus shown in FIG. 22 is cut along D-D;
FIG. 33 is a schematic diagram of a structure obtained after the optical image stabilization apparatus shown in FIG. 22 is cut along E-E; and
FIG. 34 is a schematic diagram of a partial structure of the optical image stabilization apparatus shown in FIG. 22 in some embodiments.

### DESCRIPTION OF EMBODIMENTS

The following describes embodiments of this application with reference to the accompanying drawings in embodiments of this application.

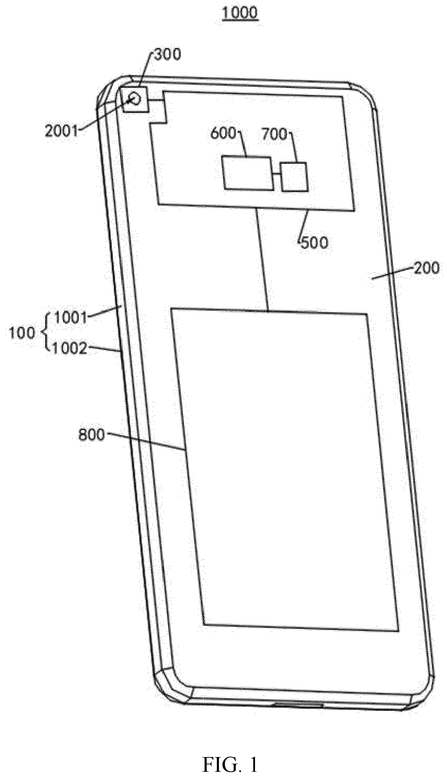

FIG. 1 is a schematic diagram of a structure of an electronic device 1000 in some embodiments according to an embodiment of this application. The electronic device may be an electronic product, for example, a mobile phone, a tablet, a notebook computer, a television, a vehicle-mounted device, a wearable device, or a video surveillance device. The wearable device may be a smart band, a smart watch, a wireless headset, augmented reality (augmented reality, AR) glasses, an augmented reality helmet, virtual reality (virtual reality, VR) glasses, a virtual reality helmet, or the like. An example in which the electronic device is a mobile phone is used for description in this embodiment of this application.

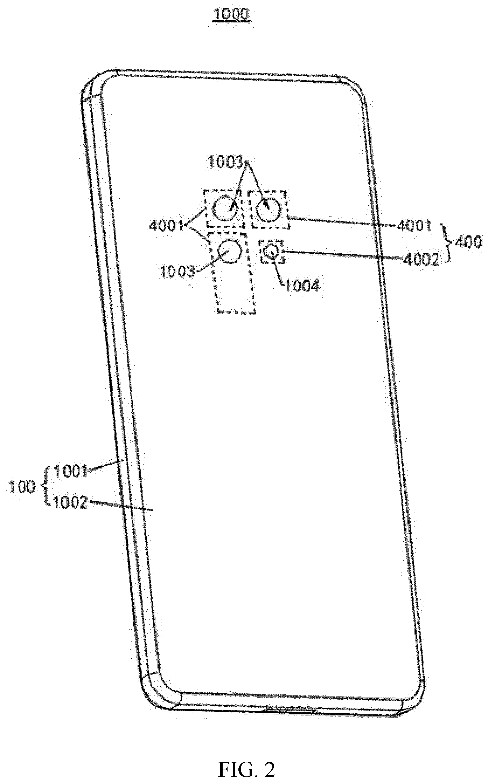

Refer to both FIG. 1 and FIG. 2. FIG. 2 is a schematic diagram of a structure of the electronic device 1000 shown in FIG. 1 from another angle. The electronic device 1000 includes a housing 100, a display 200, a front-facing camera assembly 300, a rear-facing camera assembly 400, a mainboard 500, a processor 600, a memory 700, and a battery 800. The display 200 is configured to display an image, and the display 200 may be further integrated with a touch function. The display 200 is mounted on the housing 100. The housing 100 may include a bezel 1001 and a rear cover 1002. The display 200 and the rear cover 1002 are respectively mounted on two sides opposite to each other of the bezel 1001. In this embodiment, in an external space of the electronic device 1000, a space facing the display 200 is defined as the front of the electronic device 1000, and a space facing the rear cover 1002 is defined as the rear of the electronic device 1000.

In some embodiments, the front-facing camera assembly 300 is located in an inner side of the housing 100 and is located below the display 200. The display 200 is provided with a front-facing camera hole 2001, and the front-facing camera assembly 300 collects light from the front of the electronic device 1000 through the front-facing camera hole 2001, to implement photographing. The front-facing camera assembly 300 may include a camera module described in the following embodiments, or may include a camera module of another structure.

In some embodiments, the rear cover 1002 is provided with at least one rear-facing camera hole 1003. The rear-facing camera assembly 400 is located in the inner side of the housing 100. The rear-facing camera assembly 400 collects light from the rear of the electronic device 1000 through the at least one rear-facing camera hole 1003, to implement photographing. In embodiments of this application, "at least one" includes two cases: "one" and "a plurality of", "a plurality of" means two or more than two, and "more than two" includes two. The rear-facing camera assembly 400 includes at least one camera module 4001, for example, may include one or more of a standard camera module, a long-focus camera module, a wide-angle camera module, an ultra-long-focus camera module, or an ultra-wide-angle camera module. For example, the rear-facing camera assembly 400 includes a standard camera, a wide-angle camera, and a periscope long-focus camera. The camera module 4001 of the rear-facing camera assembly 400 may include the camera module described in the following embodiments, or may include the camera module of another structure.

In some embodiments, the rear-facing camera assembly 400 may further include a flash module 4002. The rear cover 1002 is provided with a flash hole 1004. The flash module 4002 is located in the inner side of the housing 100, and emits light through the flash hole 1004.

In some embodiments, the mainboard 500 is located in the inner side of the housing 100, and the processor 600 and the memory 700 are fastened to the mainboard 500. The display 200, the front-facing camera assembly 300, and the rear-facing camera assembly 400 are coupled to the processor 600. The memory 700 is configured to store computer program code. The computer program code includes computer instructions. The processor 600 is configured to invoke the computer instructions to enable the electronic device 1000 to perform a corresponding operation, for example, enable the display 200 to display a target image, or enable the front-facing camera assembly 300 or the rear-facing camera assembly 400 to collect the target image. The battery 800 is electrically connected to the mainboard 500, and is configured to supply power to the electronic device 1000. In some embodiments, the electronic device 1000 may further include one or more of functional modules such as an antenna module, a mobile communication module, a sensor module, a motor, a microphone module, and a speaker module. These functional modules may be electrically connected to the processor 600 to transmit a signal.

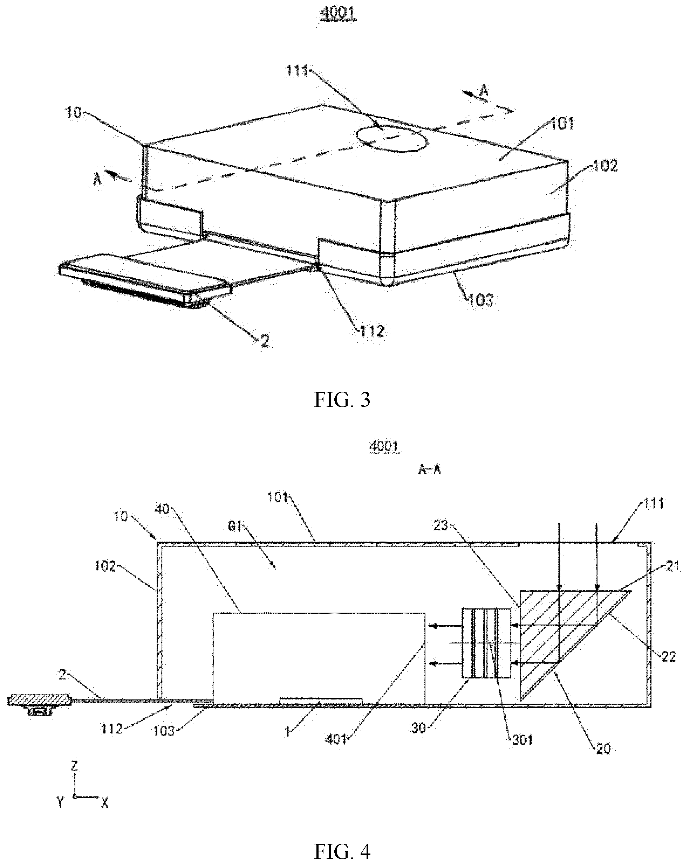

Refer to both FIG. 3 and FIG. 4. FIG. 3 is a schematic diagram of a structure of the camera module 4001 shown in FIG. 2 in Embodiment 1. FIG. 4 is a schematic diagram of a structure obtained after the camera module 4001 shown in FIG. 3 is cut along A-A. The camera module 4001 provided in Embodiment 1 is a periscope camera module. A periscope lens module may reduce a requirement on a height of the camera module 4001 by changing a propagation path of light, to reduce an overall thickness of the electronic device. The camera module 4001 includes a module frame 10, a light conversion component 20, an optical lens group 30, and an optical image stabilization apparatus 40. The light conversion component 20 and the optical lens group 30 form a lens assembly of the camera module 4001.

The module frame 10 is configured to fasten, support, and protect each component of the camera module 4001, for example, the light conversion component 20, the optical lens group 30, and the optical image stabilization apparatus 40. The module frame 10 includes a top wall 101, a side wall 102, and a bottom wall 103. The bottom wall 103 is disposed opposite to the top wall 101. The top wall 101, the side wall 102, and the bottom wall 103 may be an integrated structure, or may be fastened into an integrated structure in an assembly manner (for example, welding or bonding). The top wall 101, the side wall 102, and the bottom wall 103 are enclosed to form an accommodation space G1, and the light conversion component 20, the optical lens group 30, and the optical image stabilization apparatus 40 are all accommodated in the accommodation space G1. The top wall 101 is provided with a light-passing hole 111, and the light-passing hole 111 allows the accommodating space G1 to communicate with the outside of the module frame 10. When the camera module 4001 is mounted on the electronic device, the light-passing hole 111 may directly face a light inlet hole on a housing of the electronic device, and external light can enter the accommodation space G1 through the light-passing hole 111.

The light conversion component 20 is configured to change a direction of an incident light ray. A function manner of the light conversion component 20 is to refract the incident light ray at an angle of 90 degrees in a direction perpendicular to an optical axis by using a total reflection prism, and then the light enters an optical imaging apparatus. As shown in FIG. 4, the light conversion component 20 includes a light inlet surface 21, a light reflection surface 22, and a light outlet surface 23. The light inlet surface 21 is disposed directly facing the light-passing hole 111. External light is perpendicularly emitted into the light inlet surface 21 through the light-passing hole 111, and is bent by 90 degrees after being reflected by the light reflection surface 22, and finally is emitted in parallel in a direction perpendicular to the light outlet surface 23. For example, the light conversion component 20 is a total reflection prism, and the total reflection prism may be a prism, a quadratic prism, a reflector, or the like.

The optical lens group 30 and the light conversion component 20 jointly form the lens assembly of the camera module 4001. The optical lens group 30 includes at least one optical lens. The optical lens group 30 includes an object side and an image side. The object side is disposed opposite to the light outlet surface 23, and the image side is disposed opposite to the optical image stabilization apparatus 40. The object side receives light reflected by the light conversion component 20. After being converged or divergent by the optical lens, the light is emitted into the optical image stabilization apparatus 40 from the image side. For example, there may be a plurality of optical lenses in the optical lens group 30, and optical axes 301 of the plurality of optical lenses overlap, so that the optical lens group 30 has better optical performance. The optical lens group 30 may include at least one convex lens and at least one concave lens. In this embodiment of this application, to describe an action direction of the optical image stabilization apparatus 40, a first direction X, a second direction Y, and a third direction Z are determined by using the camera module 4001 as a reference, the first direction X and the second direction Y are disposed in an included angle, and the third direction Z is perpendicular to the first direction X and the second direction Y The optical axis 301 of the optical lens group 30 is perpendicular to the third direction Z of the camera module 4001. That the optical axis 301 is perpendicular to the third direction Z means that the optical lens group 30 and the optical image stabilization apparatus 40 may be disposed in parallel in the first direction X or the second direction Y, thereby helping reduce a size of the camera module 4001 in the third direction Z. The optical axis 301 of the optical lens group 30 is a central line of the optical lens group 30. In some embodiments, the optical lens group 30 may alternatively include a free-form curved-surface lens. In some other embodiments, the optical lens group 30 may alternatively include only one lens, to simplify a structure of the camera module 4001. In this case, the lens may be a convex lens to converge light.

A light-transmitting portion 401 is disposed on the optical image stabilization apparatus 40. The light-transmitting portion 401 is disposed opposite to the image side of the optical lens group 30. The light-transmitting portion 401 may be a structure made of a light-transmitting material, for example, a transparent glass plate or a transparent plastic plate. Alternatively, the light-transmitting portion 401 may be a light-transmitting hole disposed on the optical image stabilization apparatus 40, and is configured to receive light adjusted by the optical lens group 30. The optical image stabilization apparatus 40 is fastened in an accommodation space, for example, may be fastened on an inner surface of the accommodation space G1 in a bonding manner. The inner surface of the accommodation space G1 may be the bottom wall 103 or the side wall 102, so that structural stability of the camera module 4001 is high. In some other embodiments, the optical image stabilization apparatus 40 may alternatively be fastened in the accommodation space G1 in another manner, for example, clamping or welding. When the camera module 4001 shakes, the optical image stabilization apparatus 40 may perform reverse compensation on the shaking of the camera module 4001 through cooperative movement between internal elements, to improve imaging definition.

In some embodiments, refer to FIG. 4. The optical image stabilization apparatus 40 further includes an image sensor 1 and an external circuit board 2. The image sensor 1 (also referred to as a photosensitive component) is a semiconductor chip. There are hundreds of thousands to millions of photodiodes on a surface of the image sensor 1, and electric charges are generated when the photodiodes are irradiated by light rays. The image sensor 1 may be a charge-coupled device (charge-coupled device, CCD), or may be a complementary metal-oxide semiconductor (complementary metal-oxide semiconductor, CMOS). The image sensor 1 is configured to perform optical-to-electrical conversion and A/D (analog/digital, analog signal/digital signal) conversion on an optical signal of the incident light ray. The image sensor 1 is electrically connected to the external circuit board 2, and the module frame 10 is further provided with a through hole 112. In this embodiment, the through hole 112 is disposed at a joint between the side wall 102 and the bottom wall 103. One part of the external circuit board 2 is accommodated in the accommodation space G1, and the other part of the external circuit board 2 extends to the outside of the camera module 4001 through the through hole 112 to connect to an external circuit. The external light is emitted into the light-passing hole 111 of the camera module 4001 from the light inlet hole on the housing of the electronic device, and is emitted into the light conversion component 20 through the light-passing hole 111. After being reflected and turned by the light conversion component 20, the light is perpendicularly emitted into the optical image stabilization apparatus 40 in a direction parallel to the optical axis 301, and then passes through the light-transmitting portion 401 to reach the image sensor 1. In this embodiment, the image sensor 1 converts the light into an electrical signal and transmits the electrical signal to the external circuit board 2. The external circuit board 2 extends to the outside of the camera module 4001 through the through hole 112 and is electrically connected to the external circuit, and transmits the electrical signal to the external circuit, to finally implement optical imaging of the camera module 4001 and signal transmission between an internal circuit and the external circuit.

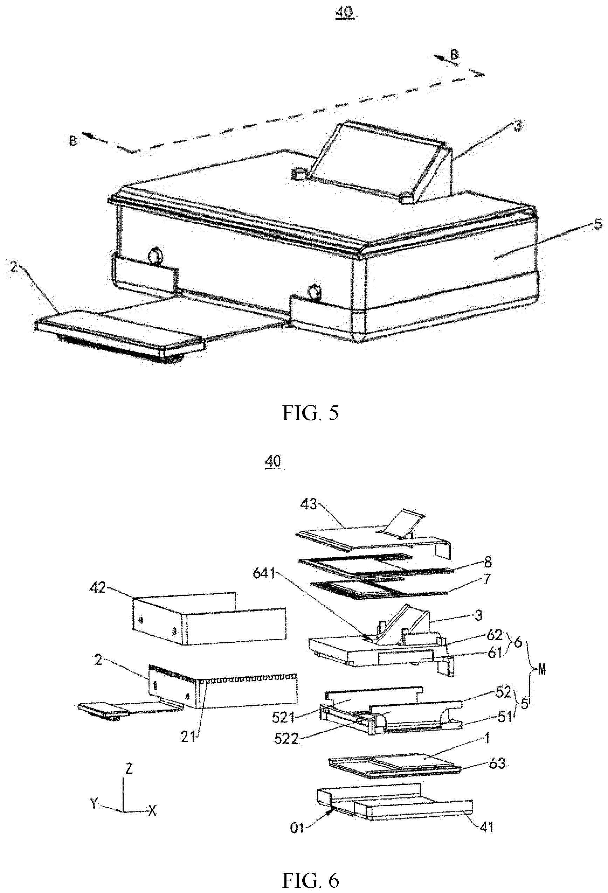

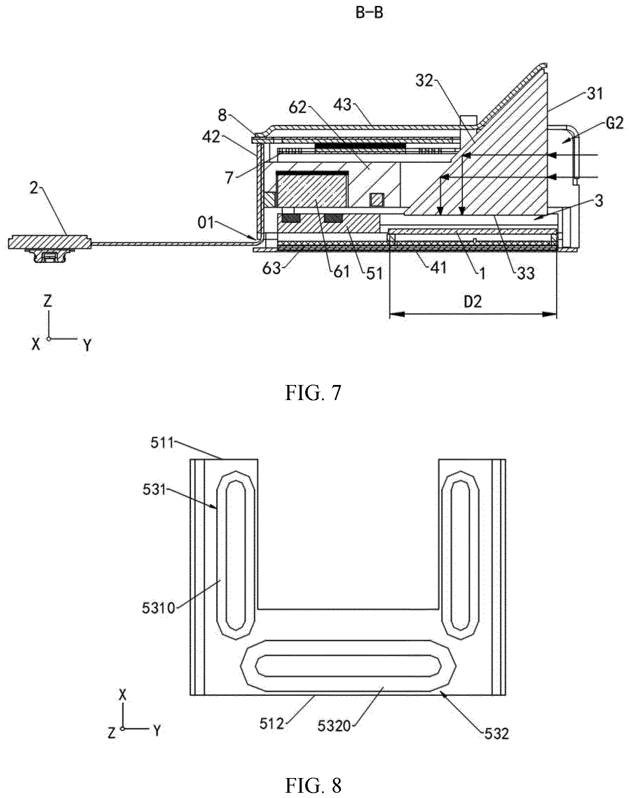

In some embodiments, refer to both FIG. 5 to FIG. 7. FIG. 5 is a schematic diagram of an overall structure of the optical image stabilization apparatus 40 shown in FIG. 3 in Embodiment 1. FIG. 6 is a schematic diagram of an exploded structure of the optical image stabilization apparatus 40 shown in FIG. 5. FIG. 7 is a schematic diagram of a structure obtained after the optical image stabilization apparatus 40 shown in FIG. 5 is cut along B-B. The optical image stabilization apparatus 40 includes a light-turning component 3, a housing 4, a drive assembly M, a first connection member 7, and a second connection member 8. The drive assembly M includes a movable member 5 and a fastening member 6. The movable member 5 is fastened to the image sensor 1. The movable member 5 and the image sensor 1 may be directly fastened, or may be fastened by setting another structure (for example, a circuit board) between the movable member 5 and the image sensor 1. The movable member 5 and the fastening member 6 cooperate with each other to drive the image sensor 1 to move in the first direction X and the second direction Y

The housing 4 includes a bottom plate 41, a middle frame 42, and an upper cover 43. The bottom plate 41 and the middle frame 42 are enclosed to form a receptacle G2. The light-turning component 3 is disposed in the receptacle. The housing 4 covers a side that is of the middle frame 42 and that faces backwards the bottom plate 41, and is configured to support and protect the light-turning component 3. The upper cover 43 may be any mechanical part, for example, metal, plastic, or ceramic. The bottom plate 41, the middle frame 42, and the upper cover 43 may be split structures connected through clamping, welding, or fastening by a member, or may be an integrated structure.

The light-turning component 3 is fastened in the receptacle G2. In a direction of an optical path, the light-turning component 3 is disposed between the optical lens group 30 (as shown in FIG. 4) and the image sensor 1. The light-turning component 3 includes an incident surface 31, a reflective surface 32, and an emergent surface 33. The incident surface 31 is disposed on the image side of the optical lens group 30. The emergent surface 33 is disposed opposite to the image sensor 1. Light emitted by the optical lens group 30 is emitted into the light-turning component 3 through the incident surface 31, then is deflected by 90 degrees after being reflected by the reflective surface 32, and finally is emitted from the emergent surface 33 and reaches the image sensor 1.

In Embodiment 1, the drive assembly M is a voice coil motor. A coil is disposed on the movable member 5, and the fastening member 6 is provided with a magnetic structure, for example, a magnet. For example, the movable member 5 may also be provided with the magnetic structure, and the coil may be disposed on the fastening member 6, provided that, when the coil is powered on, the movable member 5 and the fastening member 6 can generate relative displacement in the first direction X or the second direction Y through cooperation between the coil and the magnetic structure.

The first connection member 7 and the second connection member 8 are stacked and fastened. The first connection member 7 and the movable member 5 are directly fastened or are fastened by using another connection structure. The second connection member 8 remains relatively fastened to the fastening member 6. A fastening manner thereof may be directly fastening to the fastening member 6 or may remain relative fastening to the fastening member 6 by connecting another fastening structure (for example, the middle frame 42). The first connection member 7 and the second connection member 8 form an elastic connection structure between the fastening member 6 and the movable member 5. The elastic connection structure is also a force transmission mechanism for driving the image sensor 1 to move in the first direction X and the second direction Y by the drive assembly M.

The external circuit board 2 may be an FPC (Flexible Printed Circuit, flexible printed external circuit board), and has a bendable feature. An opening 01 is disposed at a joint between the middle frame 42 and the bottom plate 41. The external circuit board 2 is bent at the opening 01. One part of the external circuit board 2 is accommodated in the receptacle G2, and the other part extends from the inside of the receptacle G2 to the outside of the receptacle G2 through the opening 01. In addition, the opening 01 further communicates with the through hole 112 on the module frame 10, so that the external circuit board 2 passes through the accommodation space G1 through the receptacle G2, and finally extends to the outside of the camera module 4001 to be electrically connected to the external circuit. In addition, the part that is of the external circuit board 2 and that is accommodated in the receptacle G2 is further electrically connected to the image sensor 1, and a connection manner thereof may be a conductive metal wire connection or a contact connection. An electrical signal on the image sensor 1 is transmitted to the external circuit by using the external circuit board 2, to implement signal transmission between the optical image stabilization apparatus 40 and the external circuit. The external circuit is usually a graphics processing unit or a central processing unit of the electronic device 1000, for example, a mobile phone mainboard.

For example, the external circuit board 2 may also be a PCB (Printed Circuit Board, printed circuit board). In this case, a communication function between the optical image stabilization apparatus 40 and the external circuit may be implemented through cooperation of a plurality of circuit boards. Alternatively, the external circuit board 2 may be a rigid-flexible board, that is, the external circuit board 2 is a structure combining a flexible circuit board and a reinforcement board. The reinforcement board is configured to provide a rigid support, and the flexible circuit board is configured to transmit an electrical signal. A material of the external circuit board 2 may be properly designed based on an actual requirement.

In some embodiments, refer to both FIG. 6 and FIG. 7. The optical image stabilization apparatus 40 further includes a first circuit board 63. The first circuit board 63 has a corresponding circuit, so that a function of transmitting an electrical signal can be implemented. The image sensor 1 is fastened on a surface of the first circuit board 63 through welding, bonding, or the like. In addition, the image sensor 1 is further electrically connected to the first circuit board 63 by using a conductive material. For example, the image sensor 1 is electrically connected to the first circuit board 63 by using a gold wire. The gold wire can reduce resistance between the image sensor 1 and the first circuit board 63, thereby matching higher use power. In addition, the gold wire has high chemical stability, so that reliability of the electrical connection can be ensured. In addition, the gold wire has good scalability, is suitable for processing, and can reduce processing difficulty. In some other embodiments, the image sensor 1 may also be electrically connected to the first circuit board 63 in another manner, for example, a silver wire, a plating spot, or a conductive adhesive. Alternatively, the image sensor 1 and the first circuit board 63 are fastened and electrically connected by directly using a conductive material, for example, welding by using a solder ball. In addition, the first circuit board 63 is further electrically connected to the external circuit board 2, to transmit the electrical signal of the image sensor 1 to the external circuit board 2, and communicate with the central processing unit or the graphics processing unit of the electronic device by using the external circuit board 2, to complete functions such as obtaining, converting, and processing an optical image.

For example, the first circuit board 63 may be a copper foil laminate (copper clad laminate, CCL), and a reinforcing material of the copper foil laminate may be paper, glass fiber, ceramic, silicon dioxide, boron nitride, metal, resin, a composite material, or the like.

The image sensor 1 is fastened on the first circuit board 63, and the first circuit board 63 is electrically connected to the image sensor 1, so that the first circuit board 63 can support and fasten the image sensor 1, and implement a function of transmitting the signal of the image sensor 1.

In some embodiments, refer to both FIG. 6 and FIG. 8. FIG. 8 is a schematic diagram of a structure of the movable member 5 shown in FIG. 6. The movable member 5 is fastened to the first circuit board 63, and drives the first circuit board 63 to move, to achieve an objective of driving the image sensor 1 fastened on the first circuit board 63 to move. In this embodiment, the movable member 5 is directly fastened to the first circuit board 63. In another embodiment, the movable member 5 may remain relatively fastened to the first circuit board 63 by disposing another connection structure, so that synchronous motion can be implemented. For example, the movable member 5 is a part of the voice coil motor (voice coil actuator/voice coil motor, VCM). The movable member 5 may move relative to the middle frame 42. The movable member 5 is fastened to the image sensor 1 by fastening to the first circuit board 63, and is configured to drive the image sensor 1 to move in the first direction X and the second direction Y A plane formed by the first direction X and the second direction Y is parallel to a photosensitive surface of the image sensor 1. In this embodiment, parallel refers to roughly parallel, and an error within a specific range may be allowed during actual application. This solution helps to prevent a crosstalk problem caused by movement in another direction in movement processes of the image sensor 1 in the first direction X and the second direction Y If the movement plane formed by the first direction X and the second direction Y is tilted relative to the photosensitive surface of the image sensor 1, the image sensor 1 rotates or swings. Therefore, in this solution, movement precision of the image sensor 1 can be improved.

The movable member 5 includes a drive board 51 and a bent part 52. The drive board 51 is a second circuit board having conductivity, and includes a first drive board 511 and a second drive board 512. The first drive board 511 extends in the first direction X, and the second drive board 512 extends in the second direction Y A first coil 531 is disposed on the first drive board 511, and the first coil 531 includes a first long edge 5310 extending in the first direction X. A second coil 532 is displayed on the second drive board 512, and the second coil 532 includes a second long edge 5320 extending in the second direction Y When the first long edge 5310 is subject to a thrust in the second direction Y, the first coil 531 drives the movable member 5 to move in the second direction Y When the second long edge 5320 is subject to a thrust in the first direction X, the second coil 532 drives the movable member 5 to move in the first direction X.

In Embodiment 1, there are two first drive boards 511, and the two drive boards 511 are parallel to each other and are oppositely disposed on two sides that are of the second drive board 512 and that are opposite to each other in the second direction Y, to finally form a concave-shaped structure in an enclosed manner. It may be understood that, mutual parallel in this embodiment refers to roughly parallel. Because a specific error exists in an actual manufacturing and application process, a specific angle is allowed between the two drive boards 511. The first coil 531 and the second coil 532 are mounted on the drive board 51 in an embedded manner. In another embodiment, the first coil 531 and the second coil 532 may also be fastened on the drive board 51 through welding, bonding, or the like through winding and laminating.

As shown in FIG. 6, the bent part 52 includes a first bent board 521 and a second bent board 522. The first bent board 521 and the second bent board 522 are respectively fastened on two opposite sides of the drive board 51 in the second direction Y The bent part 52 and the drive board 51 form an accommodation space.

In addition, refer to FIG. 6 and FIG. 8. The fastening member 6 includes a magnetic structure 61 and a stator 62. The magnetic structure 61 is fastened on the stator 62, and the stator 62 and the drive board 51 are disposed oppositely and spaced from each other. In this embodiment, positions that correspond to the first coil 531 and the second coil 532 and that are of the stator 62 are all provided with grooves in a one-to-one correspondence. An opening of the groove faces the drive board 51. The magnetic structure 61 is accommodated in the groove, and is fastened to an inner wall surface of the groove through bonding, to be embedded in the stator 62. In another embodiment, the magnetic structure 61 may further be fastened to the stator 62 through bonding, clamping, or the like. The magnetic structure 61 includes a first magnetic pole and a second magnetic pole. Optionally, the first magnetic pole is an N pole, the second magnetic pole is an S pole, and a magnetic induction line is emitted by the N pole and finally converges to the S pole, to form a magnetic field. When currents flow into the first coil 531 and the second coil 532, the magnetic field is used to cooperate with of the first coil 531 and the second coil 532 to generate a thrust, to push the movable member 5 to move.

In Embodiment 1, the stator 62 is fastened on the bottom plate 41, and the stator 62 is further provided with an accommodation slot 641. In an implementation, the accommodation slot 641 is disposed directly facing the image sensor 1. In another implementation, the accommodation slot 641 is not necessarily disposed directly facing the image sensor 1 as long as the accommodation slot 641 is located on a path of light entering the image sensor 1. According to a feature of an optical element that needs to be disposed, the accommodation slot 641 and the image sensor 1 may also be staggered by a preset displacement. The light-turning component 3 is accommodated in the accommodation slot 641 and is fastened to the stator 62. The stator 62 fastens the light-turning component 3 in the optical image stabilization apparatus 40, and at the same time, the accommodation slot 641 is provided to accommodate the light-turning component 3. This further helps reduce a size of the optical image stabilization apparatus 40 in a direction perpendicular to the image sensor 1.

For example, when a current flows into the first coil 531, the first coil 531 is subject to a magnetic thrust in the second direction Y under an action of the magnetic field generated by the magnetic structure 61, and the first coil 531 pushes the movable member 5 to move in the second direction Y When the second coil 532 is powered on, the second coil 532 generates a magnetic thrust in the first direction X under the action of the magnetic field generated by the magnetic structure 61, and the second coil 532 pushes the movable member 5 to move in the first direction X. In addition, when magnitudes of currents that flow into the first coil 531 and the second coil 532 are different, magnitudes of magnetic thrusts generated by the first coil 531 and the second coil 532 are also different. Therefore, a magnitude of a required thrust may be obtained by controlling a magnitude of a current, so that efficiency, power, and the like of the drive assembly M meet requirements.

The movable member 5 is driven by a direct current by using a VCM as power, and does not need to be driven by a PWM. In addition, the VCM has a fast feedback speed, which meets a requirement of a conventional camera scenario. By properly designing a direction and a magnitude of the current flowing into the coil, driving efficiency of the optical image stabilization apparatus 40 can be adjusted based on a requirement, and the image sensor 1 is adjusted to a required position, thereby facilitating reverse compensation for external environment vibration.

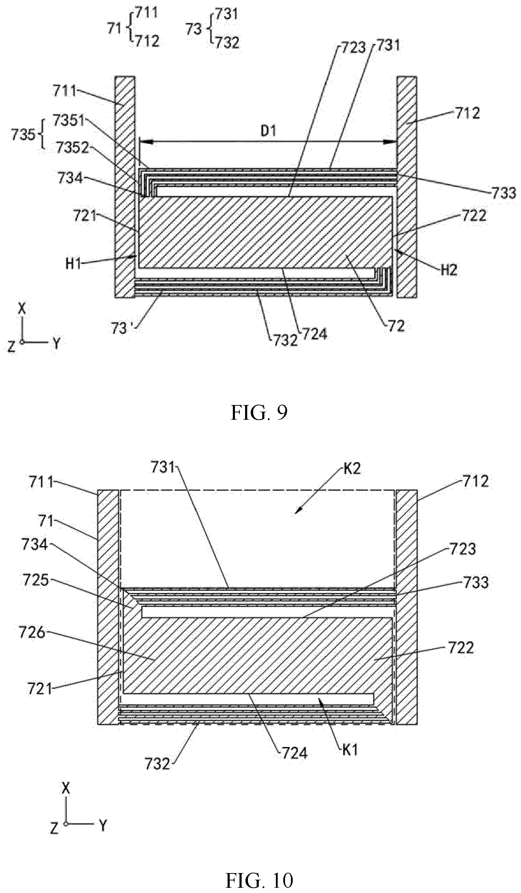

In some embodiments, refer to both FIG. 6 and FIG. 9. FIG. 9 is a schematic diagram of a structure of the first connection member 7 shown in FIG. 6. The first connection member 7 includes a first connection part 71, a second connection part 72, and a first elastic part 73. The first connection part 71 is disposed on a periphery of the second connection part 72. The first connection part 71 and the second connection part 72 are metal plates, ceramic sheets, glass plates, and the like that have support functions. The first elastic part 73 is made of an elastic material, for example, a spring or a polymer material, and may be elastically deformed under a force. The first elastic part 73 is connected between the first connection part 71 and the second connection part 72, and is elastically deformed in the first direction X, to implement relative movement between the first connection part 71 and the second connection part 72 in the first direction X.

An outer edge of the second connection part 72 includes a first edge 721, a second edge 722, a third edge 723, and a fourth edge 724 that are connected in sequence and in a closed frame shape. The first edge 721 and the second edge 722 are disposed opposite to each other, and the third edge 723 and the fourth edge 724 are disposed opposite to each other. The first connection part 71 includes a first connection plate 711 and a second connection plate 712. The first connection plate 711 is disposed on a periphery of the first edge 721, and is disposed and spaced from the first edge 721 through a gap H1. The second connection plate 712 is disposed on a periphery of the second edge 722, and is disposed and spaced from the second edge 722 through a gap H2. The first connection part 71 includes the first connection plate 711 and the second connection plate 712, the first connection plate 711 and the second connection plate 712 are symmetrically disposed on two sides of the second connection part 72, and the two sides of the second connection part 72 are both subject to acting forces exerted by the first connection plate 711 and the second connection plate 712, so that a state of force balance is always maintained in a motion process, and a motion track is not skewed. This helps accurately adjust a position of the image sensor 1. In addition, both the first connection plate 711 and the second connection plate 712 are disposed and spaced from the second connection part 72, so that motion interference, friction damage, and the like between the first connection part 71 and the second connection part 72 are avoided.

There are two first elastic parts 73, and the first elastic part 73 includes a first elastic sub-part 731 and a second elastic sub-part 732. The first elastic sub-part 731 and the second elastic sub-part 732 are respectively disposed on two sides of the second connection part 72 in the first direction X. The first elastic sub-part 731 is located on a periphery of the third edge 723 and is connected to the second connection part 72 and the second connection plate 712, and a position at which the first elastic sub-part 731 is connected to the second connection part 72 is a position of the first edge 721 adjacent to the third edge 723. The second elastic sub-part 732 is located on a periphery of the fourth edge 724 and is connected to the first connection plate 711 and the second connection part 72, and a position at which the second elastic sub-part 732 is connected to the second connection part 72 is a position of the second edge 722 adjacent to the fourth edge 724. A connection position between the first elastic sub-part 731 and the second connection part 72 and a connection position between the second elastic sub-part 732 and the second connection part 72 are centro-symmetric with respect to the second connection part 72, so that when the first elastic part 73 is elastically deformed, acting forces on the first connection part 71 and the second connection part 72 are also symmetric, thereby avoiding tilt and offset of relative motion between the first connection part 71 and the second connection part 72. This helps accurately adjust a position of the image sensor.

In some embodiments, refer to FIG. 9. The first elastic part 73 includes at least one first spring wire. In Embodiment 1, the first elastic part 73 includes four first spring wires 73', and the four first spring wires 73' are sequentially arranged at spacings between the first connection part 71 and the second connection part 72. The first elastic part 73 is disposed as a first spring wire 73', so that relative motion between the first connection part 71 and the second connection part 72 can be implemented through elastic deformation of the first spring wire 73'. A plurality of first spring wires 73' are disposed and spaced from the first connection part 71 and the second connection part 72, so that friction resistance and friction damage caused by contact between the first connection part 71 and the second connection part 72 when the first connection part 71 and the second connection part 72 move relative to each other can be avoided. In addition, an electrical signal can be transmitted to the second connection part 72 through the first connection part 71 and the first elastic part 73 in sequence, so that a short circuit in a transmission process of the electrical signal is avoided. In addition, an electric trace is disposed on the first connection member 7 to transmit an electric signal. A quantity of the first spring wires 73' is increased, so that electric traces can be better arranged. Assuming that there is one first spring wire 73', and a plurality of electric traces need to be arranged on the same first spring wire, a width of the first spring wire 73' is increased, elasticity of the first spring wire 73' is correspondingly reduced, and an elastic force is also reduced. The quantity of the first spring wires 73' is increased, so that the electric traces can be better arranged, the width of the first spring wire 73' can be reduced, and a deformation capability of the first spring wire 73' can be increased, thereby ensuring an elastic deformation capability of the first elastic part 73.

In some embodiments, refer to FIG. 9. One end that is of the first spring wire 73' and that is connected to the first connection part 71 is a first end 733, the other end connected to the second connection part 72 is a second end 734, a part connected between the first end 733 and the second end 734 is a first body 735, and the first body 735 is in a straight strip shape and extends in the second direction Y An extension distance of the first body 735 in the second direction Y is greater than or equal to an extension distance of the image sensor 1 in the second direction Y, and a vertical projection of the image sensor 1 on the first body 735 falls within a range of the first body 735. The first body 735 includes a first segment 7351 and a second segment 7352 that are connected to each other. The first segment 7351 extends in the second direction Y, and the second segment 7352 extends in the first direction X, so that the second segment 7352 is bent relative to the first segment 7351. For example, the first segment 7351 and the second segment 7352 are perpendicular to each other. An end that is of the second segment 7352 and that is away from the first segment 7351 is the second end 734, and an end that is of the first segment 7351 and that is away from the second segment 7352 is the first end 733, that is, the first connection part 71, the first segment 7351, the second segment 7352, and the second connection part 72 are connected in sequence. When the first elastic part 73 is subject to a thrust in the first direction X, the first segment 7351 is elastically deformed in the first direction X, and the second segment 7352 is rigid in the first direction X, so that the second connection part 72 and the first connection part 71 move relative to each other in the first direction X. The extension distance D1 of the first body 735 in the second direction Y is greater than or equal to the extension distance D2 of the image sensor 1 in the second direction Y, so that when a size of the first connection member 7 is fixed, a size of the first body 735 can be maximized, so that a force arm of the first elastic part 73 in the first direction X is longer, and an elastic force of the first elastic part 73 in the first direction X is greater. Therefore, a torque of the first connection member 7 is greater, and driving efficiency is higher.

In some embodiments, FIG. 10 is a schematic diagram of a structure of the first connection member 7 in FIG. 6 in some other possible embodiments. The second connection part 72 includes a first extension part 725 and a first connection body 726. There are two first extension parts 725. One first extension part 725 is disposed at a position that is on the first edge 721 and that is adjacent to the third edge 723 and is connected to the first elastic sub-part 731. The other first extension part 725 is disposed at a position that is on the second edge 722 and that is adjacent to the fourth edge 724 and is connected to the second elastic sub-part 732. The first spring wire extends in the second direction Y, the first end 733 is connected to the second connection plate 712, the second end 734 is connected to the first extension part 725, and a side that is of the first extension part 725 and that is connected to the second end 734 and the third edge 723 are disposed at an included angle, so that a force arm of a first spring wire on the periphery of the third edge 723 is maximized in the second direction Y Similarly, a side that is of the first extension part 725 and that is connected to the first spring wire on the periphery of the fourth edge 724 and the fourth edge 724 are also disposed at an included angle, so that a force arm of a first spring wire on the periphery of the fourth edge 724 is maximized in the second direction Y, and the first connection member 7 can output a larger torque.

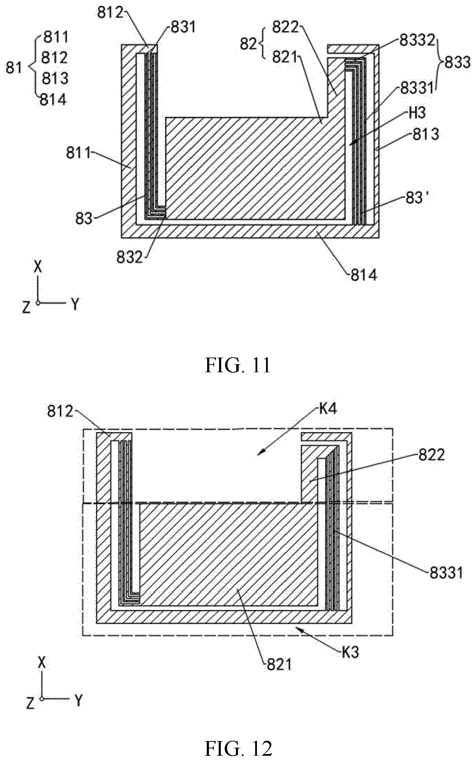

In an embodiment, the optical image stabilization apparatus 40 further includes a second connection member 8. FIG. 11 is a schematic diagram of a structure of the second connection member 8 shown in FIG. 6. The second connection member 8 includes a third connection part 81, a fourth connection part 82, and a second elastic part 83. The third connection part 81 is disposed around a periphery of the fourth connection part 82, and is disposed and spaced from the fourth connection part 82 through a third gap H3. The third connection part 81 is an unclosed frame-shaped structure, and includes a first bezel 811, a second bezel 812, a third bezel 813, and a fourth bezel 814 that are connected in sequence. The first bezel 811 and the third bezel 813 are disposed opposite to each other in the second direction Y, and the second bezel 812 and the fourth bezel 814 are disposed opposite to each other in the first direction X. The second elastic part 83 is connected between the third connection part 81 and the fourth connection part 82, and is elastically deformed in the second direction Y, to implement relative movement between the third connection part 81 and the fourth connection part 82 in the second direction Y

For example, there are two second elastic parts 83. One second elastic part 83 is located between the first bezel 811 and the fourth connection part 82, and the other second elastic part 83 is located between the third bezel 813 and the fourth connection part 82. The two second elastic parts 83 are respectively disposed on two opposite sides of the fourth connection part 82 in the second direction Y, so that the third connection part 81 and the fourth connection part 82 are force-balanced in the second direction Y In this way, balance can be maintained in a movement process.

The second elastic part 83 includes at least one second spring wire 83'. In Embodiment 1, the second elastic part 83 includes four second spring wires 83', and the four second spring wires 83' are sequentially arranged at spacings between the third connection part 81 and the fourth connection part 82. One end that is of the second spring wire 83' and that is connected to the third connection part 81 is a third end 831, and one end connected to the fourth connection part 82 is a fourth end 832. A part between the third end 831 and the fourth end 832 is a second body 833. An extension distance of the second body 833 in the first direction X is greater than an extension distance of the image sensor 1 in the first direction X, and a vertical projection of the image sensor 1 on the second body 833 falls within a range of the second body 833. The second body 833 may deform in the second direction Y, so that the third connection part 81 and the fourth connection part 82 move relative to each other in the second direction Y The second body 833 is disposed and spaced from both the third connection part 81 and the fourth connection part 82 through gaps, to avoid motion interference, friction damage, and the like between the third connection part 81 and the fourth connection part 82. The extension distance of the second body 833 in the first direction X to be greater than or equal to the extension distance of a graphic sensor 1 in the first direction X, so that when a size of the second connection member 8 in the first direction X is fixed, a size of the second body 833 can be maximized. Therefore, an elastic force of the second elastic part 83 in the second direction Y is larger, and an output torque is also larger.

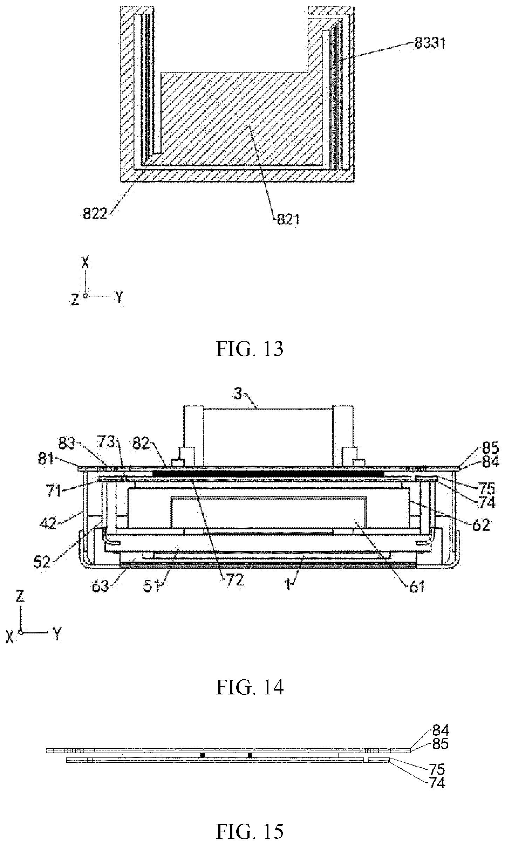

In some embodiments, refer to FIG. 11, FIG. 12, and FIG. 13. FIG. 12 and FIG. 13 are both schematic diagrams of structures of the second connection member 8 in other possible embodiments. The second body 833 includes a third segment 8331 and a fourth segment 8332 that are connected to each other. The third segment 8331 extends in the first direction X, the fourth segment 8332 extends in the second direction Y, the fourth segment 8332 is rigid, and the fourth segment 8332 is bent at an angle of 90 degrees relative to the third segment 8331. An end that is of the third segment 8331 and that is away from the fourth segment 8332 is the third end 831, and an end that is of the fourth segment 8332 and that is away from the third segment 8331 is the fourth end 832. The fourth connection part 82 includes a second connection body 821 and a second extension part 822, and the second extension part 822 is disposed between the second connection body 821 and the second bezel 812. A position at which a fourth segment 8332 of one second elastic part 83 is connected to the second connection body 821 is at a corner away from the second extension part 822, and a position at which a fourth segment 8332 of the other second elastic part 83 is connected to the second extension part 822 is at a corner away from the second connection body 821. Two second elastic parts 83 are disposed, and the two second elastic parts 83 are respectively disposed on two opposite sides of the second connection body 821 in the second direction Y, so that interaction acting forces between the third connection part 81 and the fourth connection part 82 may be more uniform and symmetric, and relative motion between the third connection part 81 and the fourth connection part 82 is more balanced. The second extension part 822 is disposed, and a size of the second elastic part 83 in the first direction X may be larger, so that a larger torque can be output.

For example, the fourth connection part 82 includes one second extension part 822, and the fourth segment 8332 is connected to the second extension part 822 by using the fourth end 832. In another embodiment, a quantity, a shape, and the like of the second extension parts 822 may be properly designed based on an actual requirement, so that a size and an output force of the second connection member 8 meet requirements. As shown in FIG. 12, there is one second extension part 822, and a side edge that is of the second extension part 822 and that is connected to the third segment 8331 is disposed in an included angle with the second direction Y As shown in FIG. 14, there are two second extension parts 822, and the two second extension parts 822 are centro-symmetric with respect to the second connection body 821. The second spring wire includes the third segment 8331 and the fourth segment 8332, and the second extension part 822 is disposed to implement a connection between the second elastic part 83 and the fourth connection part 82. This helps extend a length of the third segment 8331 in the first direction X. When the second elastic part 83 is subject to a thrust in the second direction Y, the third segment 8331 is elastically deformed in the second direction Y, and the fourth segment 8332 is rigid in the second direction Y, so that the fourth connection part 82 and the third connection part 81 move relative to each other in the second direction Y The third segment 8331 is longer, so that a torque of the second connection member 8 is greater, and driving efficiency is higher.

In some embodiments, refer to FIG. 6, FIG. 10, and FIG. 12. A first region K1 and a second region K2 are included between the first connection plate 711 and the second connection plate 712, and the first region K1 and the second region K2 are adjacently disposed in the first direction X. Both the second connection part 72 and the first elastic part 73 are located in the first region K1. The second region K2 is a hollow structure, and in a direction perpendicular to the image sensor 1, the second region K2 directly faces the image sensor 1. The second connection member 8 includes a third region K3 and a fourth region K4 that are adjacently disposed in the first direction X. The second bezel 812 is provided with a notch, the fourth region K4 is located between the notch and the third region K3, and the fourth region K4 is a hollow structure. The notch communicates with the fourth region K4, thereby expanding, within a limited size range, a size of space that can be used to accommodate the light-turning component 3 in the first direction X. This facilitates installation of the light-turning component 3, and facilitates miniaturization designing of the optical image stabilization apparatus 40. In this embodiment, the second connection member 8 and the first connection member 7 are stacked, and the fourth region K4 and the second region K2 are disposed directly facing and connected to each other, to accommodate the optical element. In this embodiment, the optical element is the light-turning component 3. In other embodiments, the optical element may also be the optical lens group 30 or the like. The second region K2 and the fourth region K4 are disposed as hollow structures, and the optical element is disposed in the second region K2 and the fourth region K4, so that the optical element and the drive assembly M are disposed at a same layer. This helps reduce a size of the optical image stabilization apparatus 40, and enables both the second region K2 and the fourth region K4 to directly face the image sensor 1. This helps the image sensor 1 receive external light.

In some embodiments, refer to FIG. 6 and FIG. 14. FIG. 14 is a schematic diagram of a connection structure of the optical image stabilization apparatus 40 in a possible embodiment. The bent part 52 includes a first bent board 521 and a second bent board 522. The first bent board 521 and the second bent board 522 are respectively fastened on two opposite sides of the drive board 51 in the second direction Y The stator 62 is disposed between the first bent board 521 and the second bent board 522, so that the magnetic structure 61 is disposed directly facing a coil on the drive board 51. The first connection member 7 and the second connection member 8 are stacked in sequence on a side that is of the movable member 5 and that faces backwards the image sensor 1. The first connection part 71 is disposed on a periphery of the second connection part 72, and is fastened on the bent part 52. The second connection part 72 is fastened to the fourth connection part 82. The third connection part 81 is disposed on a periphery of the fourth connection part 82, and the third connection part 81 is further connected to the middle frame 42, so that the third connection part 81 remains fastened to the stator 62. In this embodiment, because the middle frame 42 is disposed on an outer side of the bent part 52, a projection of the second connection member 8 in a direction perpendicular to the image sensor 1 is greater than a projection of the first connection member 7 in the direction perpendicular to the image sensor 1. The movable member 5 and the first connection member 7, and the first connection member 7 and the second connection member 8 may be fastened through welding, bonding, or the like. When the drive board 51 moves in the first direction X, the bent part 52 drives the first connection part 71 to move in the first direction X, the entire second connection member 8 remains fastened by fastening the third connection part 81 and the middle frame 42, and the second connection part 72 remains fastened by being connected to the fourth connection part 82. In this case, the first elastic part 73 is bent and deformed in the first direction X, so that the first connection part 71 and the second connection part 72 move relative to each other. When the drive board 51 moves in the second direction Y, the bent part 52 drives the entire first connection member 7 to move in the second direction Y, and the first connection member 7 drives, by using the second connection part 72, the fourth connection part 82 to move in the second direction Y Because the third connection part 81 is fastened to the middle frame 42, the second elastic part 83 is bent and deformed in the second direction Y, so that the third connection part 81 and the fourth connection part 82 move relative to each other in the second direction Y In addition, the drive board 51 is further fastened to the first circuit board 63. When the drive board 51 moves in the first direction X or the second direction Y, the first circuit board 63 and the drive board 51 move synchronously. The bent part 52 is disposed on the drive board 51, and the stator 62 is disposed between the first bent board 521 and the second bent board 522. This helps reduce an installation space of the drive assembly M, thereby reducing a size of the optical image stabilization apparatus 40 in a third direction Z. In addition, a position of the image sensor 1 is adjusted through cooperation between the first connection member 7 and the second connection member 8 disposed in the optical image stabilization apparatus 40. Compared with a structure in which one connection member is used to move, this structure helps reduce sizes of the optical image stabilization apparatus 40 in the first direction X and the second direction Y

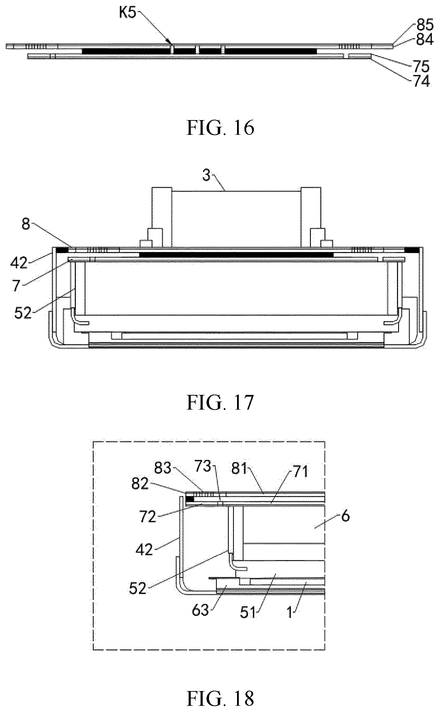

In some possible embodiments, refer to both FIG. 6 and FIG. 17. FIG. 17 is a schematic diagram of a connection structure of the optical image stabilization apparatus 40 in some other possible embodiments. In this embodiment, in a direction perpendicular to the image sensor 1, a projection area of the first connection member 7 is equal to a projection area of the second connection member 8. The first connection member 7 is fastened to the bent part 52, and the second connection member 8 is fastened on the middle frame 42 by using another fastening structure. As shown in FIG. 6, the fastening structure may be made through welding, bonding, or the like. Alternatively, the fastening structure may be a connection plate, a support, or the like that is separated from the middle frame 42. One end of the fastening structure is fastened to the fourth connection part 82, and the other end extends to the middle frame 42 and is fastened to the middle frame 42. In this case, the second connection member 8 may be accommodated inside the middle frame 42. This helps reduce a size of the optical image stabilization apparatus 40. It may be understood that, in another embodiment, a size relationship between the first connection member 7 and the second connection member 8 may be adjusted based on a change of a specific installation structure.

In some embodiments, FIG. 15 is a schematic diagram of a layer structure of the first connection member 7 and the second connection member 8. The first connection member 7 includes a first substrate 74 and a first line layer 75. The first line layer 75 may be manufactured by depositing a metal layer on a surface of the first substrate 74, and may be a copper foil. A first electric trace is further disposed on the first line layer 75, and the first electric trace enables the first connection part 71, the first elastic part 73, and the second connection part 72 to be electrically connected in sequence. The second connection member 8 includes a second substrate 84 and a second line layer 85. The second line layer 85 may also be manufactured by depositing a metal layer on a surface of the second substrate 84. A second electric trace is disposed on the second line layer 85, and the second electric trace enables the fourth connection part 82, the second elastic part 83, and the third connection part 81 to be electrically connected in sequence. The first line layer 75 and the second line layer 85 are adjacently disposed, and a pad is disposed on a surface that is of the first line layer 75 and that faces the second line layer 85. The first electric trace and the second electric trace may be electrically connected by welding the pad by using a conductive solder. The first substrate 74 and the second substrate 84 are configured to support and fasten, and the first line layer 75 and the second line layer 85 are configured to transmit electrical signals, to implement conductive properties of the first connection member 7 and the second connection member 8. The second electric trace 85 may further be electrically connected to an external circuit by using a gold wire, wirelessly, or the like.

For example, refer to FIG. 16. When the first substrate 74 and the second substrate 84 are metal substrates, and the first substrate 74 and the second substrate 84 are adjacently disposed and fastened, an adhesive material or a welding material between the first connection member 7 and the second connection member 8 may be provided with a conductive through hole K5, an inner wall surface of the conductive through hole K5 is further coated with an insulation material, and the conductive through hole K5 is filled with a conductive material, so that the first line layer 75 and the second line layer 85 can be electrically connected. After being transmitted to the first substrate 74, an electrical signal on the bent part 52 is transmitted to the second electric trace through the first electric trace and the conductive material in the conductive through hole K5 in sequence, and finally is transmitted to the external circuit.

In some embodiments, refer to both FIG. 6 and FIG. 14. A plurality of metal pins 21 are disposed on the external circuit board 2, the second connection member 8 is electrically connected to the metal pins 21 on the external circuit board 2 by using gold wires. An electrical signal on the image sensor 1 is transmitted to the drive board 51 by using the first circuit board 63, the drive board 51 transmits the electrical signal to the bent part 52, and the bent part 52 transmits the electrical signal to the first connection part 71. The electrical signal on the first connection part 71 is transmitted to the external circuit board 2 through the first elastic part 73, the second connection part 72, the fourth connection part 82, the second elastic part 83, and the third connection part 81 in sequence. In another embodiment, the external circuit board 2 may also be directly connected to the second connection member 8, to transmit the electrical signal. The first connection member 7 and the second connection member 8 are stacked and connected, and both the first connection member 7 and the second connection member 8 are conductivity. The first connection member 7 is electrically connected to the image sensor 1, and the second connection member 8 is electrically connected to the external circuit board 2, so that electrical signals between the image sensor 1 and the external circuit are transmitted to each other.

In an implementation shown in FIG. 14, the first connection part 71 is located on a periphery of the second connection part 72, and the third connection part 81 is located on a periphery of the fourth connection part 82. It may be understood that the second connection part 72 is located in a middle region of the first connection member 7, and the fourth connection part 82 is located in a middle region of the second connection member 8. In this implementation, the middle regions of the first connection member 7 and the second connection member 8 are fastened, an edge position (the first connection part 71) of the first connection member 7 is fastened to the movable member, and an edge position (the third connection part 81) of the second connection member 8 is fastened to the fastening member 6. In other words, a joint between the first connection member 7 and the drive assembly M and a joint between the second connection member 8 and the drive assembly M are at peripheral edge positions, and a size of the peripheral edge position is larger than that of the middle region. Therefore, fastened connection reliability can be improved. Specifically, the first connection part 71 and the second connection part 72 are disposed at a same layer, and the third connection part 81 and the fourth connection part 82 are disposed at a same layer. In addition to implementing that the first connection part 71 and the second connection part 72 move relative to each other in the first direction X and the third connection part 81 and the fourth connection part 82 move relative to each other in the second direction Y, this further helps reduce sizes of the first connection member 7 and the second connection member 8 that are perpendicular to the first direction X and the second direction Y, and reduce the size of the optical image stabilization apparatus 40.

In the implementation shown in FIG. 14, the first connection member 7, the bent part 52, and the drive board 51 are jointly enclosed to form an accommodation space, the fastening member 6 is located in the accommodation space, and the second connection member 8 is located on a side that is of the first connection member 7 and that is away from the fastening member 6. A layout in the stacking direction in this solution helps reduce a thickness of the optical image stabilization apparatus 40, ensure a driving force provided by the drive assembly M, and improve efficiency of driving the image sensor 1 to move by the drive assembly M.

For example, FIG. 18 is a schematic diagram of a partial structure of the optical image stabilization apparatus 40 shown in FIG. 6 in some other embodiments. The second connection part 72 is disposed on a periphery of the first connection part 71, and the fourth connection part 82 is disposed on a periphery of the third connection part 81. The first connection part 71 is fastened to the bent part 52, the second connection part 72 is fastened to the fourth connection part 82, and the third connection part 81 may remain relatively fastened to the middle frame 42 or the fastening member 6 by using another fastening structure. When the drive board 51 moves in the first direction X, the drive board 51 drives, by using the bent part 52, the first connection part 71 to move in the first direction X. Because the third connection part 81 remains relatively fastened to the fastening member 6, and the second elastic part 83 is rigid in the first direction X, the fourth connection part 82 also remains fastened. In addition, because the second connection part 72 is fastened to the fourth connection part 82, the first connection part 71 and the second connection part 72 move relative to each other in the first direction X. In this case, the drive board 51 drives the image sensor 1 to move in the first direction X. When the drive board 51 moves in the second direction Y, because the first elastic part 73 is rigid in the second direction Y, the drive board 51 drives, by using the bent part 52, the entire first connection member 7 to move in the second direction Y, and the second connection part 72 drives the third connection part 81 to move in the second direction Y The third connection part 81 and the fastening member 6 remain relatively fastened, the second elastic part 83 is elastically deformed in the second direction Y, and the third connection part 81 and the fourth connection part 82 move relative to each other in the second direction Y, so that the drive board 51 drives the image sensor 1 to move in the second direction Y In addition, an electrical signal on the image sensor 1 is transmitted to the external circuit board 2 through the first circuit board 63, the drive board 51, the bent part 52, the first connection part 71, the first elastic part 73, the second connection part 72, the fourth connection part 82, the second elastic part 83, and the third connection part 81 in sequence. The third connection part 81 may be electrically connected to the external circuit board 2 by using a conducting wire, an FPC, or the like.

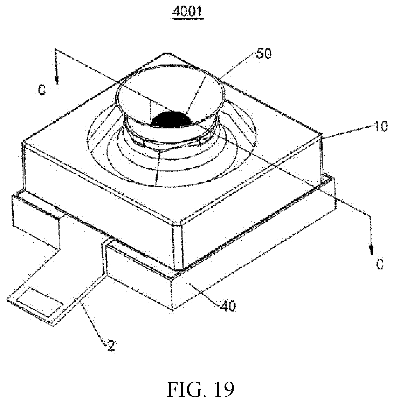

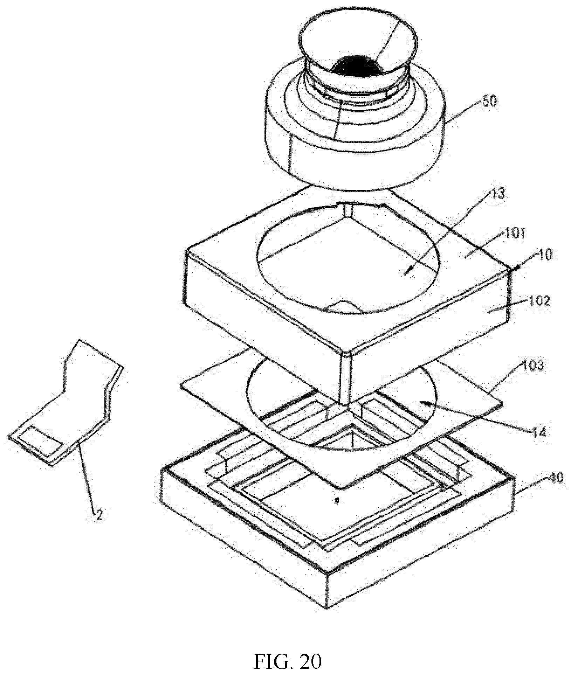

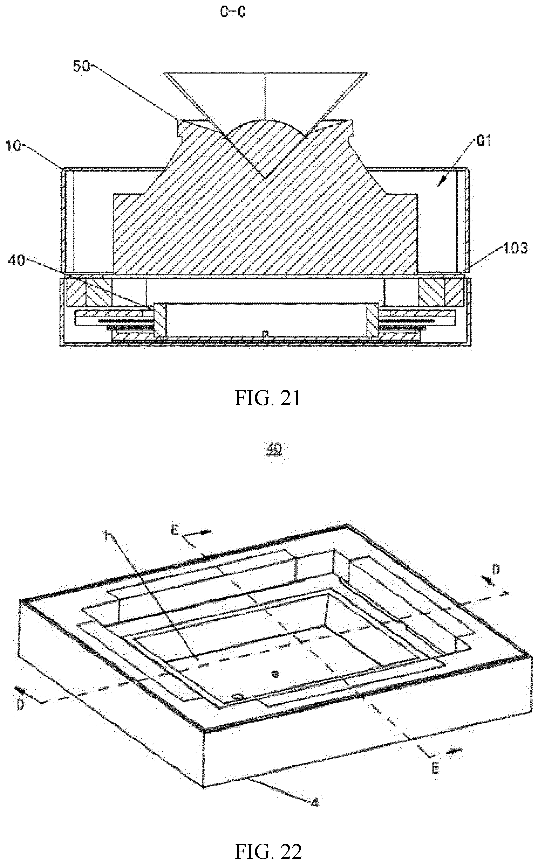

Refer to both FIG. 19 to FIG. 21. FIG. 19 is a schematic diagram of a structure of the camera module 4001 shown in FIG. 2 in Embodiment 2. FIG. 20 is a schematic diagram of an exploded structure of the camera module 4001 shown in FIG. 19. FIG. 21 is a schematic diagram of a structure obtained after the camera module 4001 shown in FIG. 19 is cut along C-C. In this embodiment, the camera module 4001 is used in an upright imaging device, and includes a module frame 10, a lens 50, an external circuit board 2, and an optical image stabilization apparatus 40. The lens 50 may include a lens tube and a lens group mounted on an inner side of the lens tube, and the lens 50 is disposed on a light inlet side of the optical image stabilization apparatus 40. The module frame 10 is connected to the optical image stabilization apparatus 40, and the module frame 10 and the optical image stabilization apparatus 40 are enclosed to form an accommodation space G1, to fixedly install the lens 50 in the accommodation space G1.

The module frame 10 includes a bottom wall 103, a top wall 101, and a side wall 102. The top wall 101 and the side wall 102 are enclosed to form a structure for supporting, fastening, and protecting the lens 50. The top wall 101 and the side wall 102 may be an integrated structure, or may be connected through bonding, welding, or clamping. The bottom wall 103 and the optical image stabilization apparatus 40 are further stacked and connected, to fixedly install and the lens 50 and the optical image stabilization apparatus 40. The top wall 101 is provided with a first light-passing hole 13, and the bottom wall 103 is provided with a second light-passing hole 14. The first light-passing hole 13 communicates with the second light-passing hole 14, and both the first light-passing hole 13 and the second light-passing hole 14 are disposed opposite to the optical image stabilization apparatus 40, so that external light is emitted into the lens 50 through the first light-passing hole 13, and is converged by the lens group in the lens 50 and then emitted into the optical image stabilization apparatus 40 through the second light-passing hole 14.

The external circuit board 2 is disposed on one side of the module frame 10, and is configured to be connected to a graphics processing unit or a central processing unit of an electronic device. In addition, the external circuit board 2 is further electrically connected to the optical image stabilization apparatus 40. The connection manner may be a gold wire connection. For example, one end of the gold wire extends into a receptacle to be electrically connected to the optical image stabilization apparatus 40, and the other end is led out to the outside of the module frame 10 to be electrically connected to an external circuit, for example, a mainboard of the electronic device. Alternatively, the module frame 10 is provided with a through hole, so that one end of the external circuit board 2 extends into the module frame 10 through the through hole and is electrically connected to the optical image stabilization apparatus 40. In another embodiment, the optical image stabilization apparatus 40 may be electrically connected to the external circuit board 2 in another manner.

In Embodiment 2, the optical image stabilization apparatus 40 includes a voice coil motor. When the camera module 4001 shakes, the voice coil motor drives movement of the optical image stabilization apparatus 40 to compensate for a shake displacement of the camera module 4001, thereby improving imaging quality of the camera module 4001 when the camera module 4001 shakes, and implementing an optical image stabilization function. In addition, an overall thickness of the optical image stabilization apparatus 40 in Embodiment 2 is small. The optical image stabilization apparatus 40 provided in Embodiment 2 is disposed in the camera module 4001. In addition to implementing the optical image stabilization function, this structure is also simple and has a small size. This helps meet a design requirement of the camera module 4001 for miniaturization.

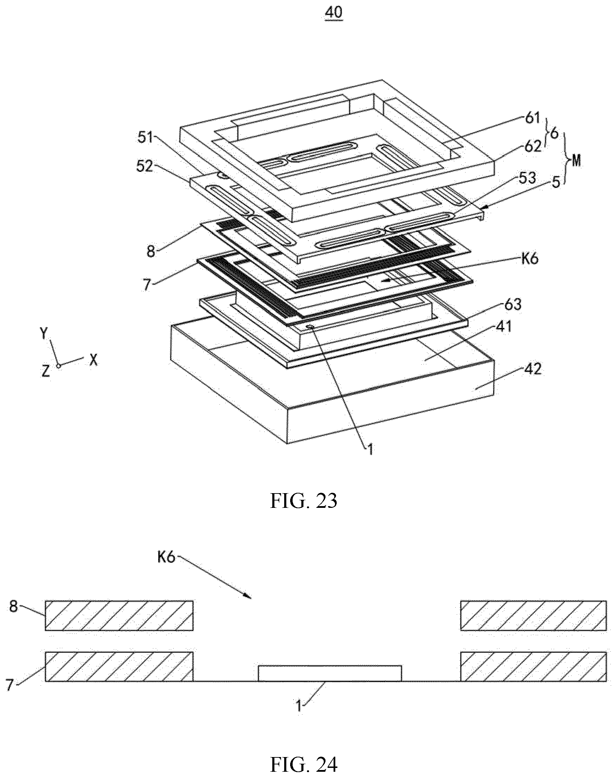

Refer to both FIG. 22 and FIG. 23. FIG. 22 is a schematic diagram of an overall structure of the optical image stabilization apparatus 40 shown in FIG. 20. FIG. 23 is a schematic diagram of an exploded structure of the optical image stabilization apparatus 40 shown in FIG. 22. The optical image stabilization apparatus 40 includes a housing 4, a drive assembly M, an image sensor 1, a first connection member 7, and a second connection member 8. The first connection member 7 and the second connection member 8 are force transmission structures connected to the drive assembly M, and are also elastic structures. The first connection member 7 and the second connection member 8 may also be arranged with electric traces to implement electrical connection.

The housing 4 includes a bottom plate 41 and a middle frame 42. The bottom plate 41 and the middle frame 42 are connected to form a receptacle with an opening at one end. Both the drive assembly M and the image sensor 1 are disposed in the receptacle, the drive assembly M is connected to the image sensor 1, the image sensor 1 is disposed on a side that is of the receptacle and that is close to the bottom plate 41, the bottom plate 41 is configured to support and fasten the drive assembly M and the image sensor 1, and the middle frame 42 protects the drive assembly M and the image sensor 1. The opening of the receptacle provides a channel for external light to enter the image sensor 1.

The optical image stabilization apparatus 40 further includes a first circuit board 63. The first circuit board 63 may be a flexible circuit board, or may be a rigid-flexible combination circuit board, or may be an integrated circuit board formed by connecting a rigid circuit board and a flexible circuit board. The first circuit board 63 is disposed on a surface that is of the bottom plate 41 and that faces the receptacle. The image sensor 1 is fastened on the first circuit board 63 and is electrically connected to the first circuit board 63. A connection manner thereof may be bonding, welding, or metal wire contact connection. The first circuit board 63 that is fastened to the image sensor 1 is disposed, and the image sensor 1 is electrically connected to the first circuit board 63, so that the image sensor 1 can be fastened, and an electrical signal of the image sensor 1 can be further transmitted to the external circuit through a connection between the first circuit board 63 and the external circuit.

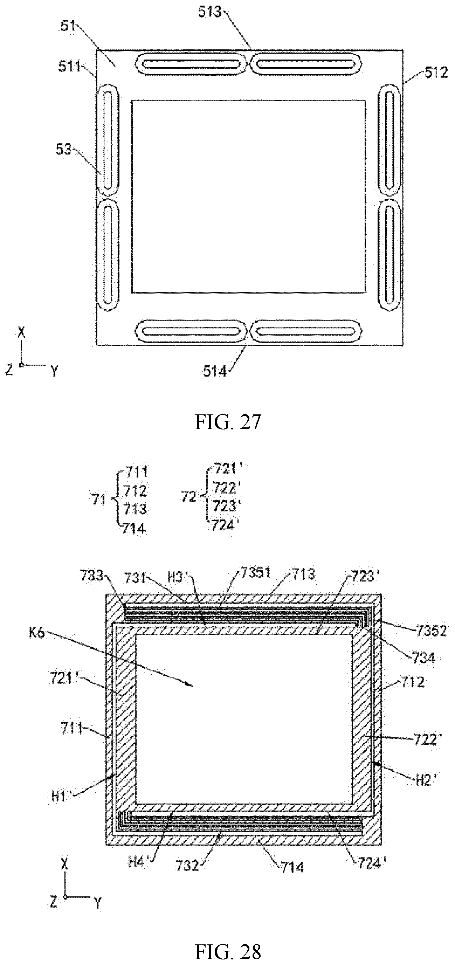

The drive assembly M includes a movable member 5 and a fastening member 6. Refer to both FIG. 23 and FIG. 27. FIG. 27 is a schematic diagram of a structure of the movable member 5 shown in FIG. 23. The movable member 5 includes a drive board 51 and a bent part 52, and the drive board 51 and the bent part 52 are fastened to each other. The drive board 51 and the bent part 52 may be an integrated structure. A coil 53 is disposed on the drive board 51, and the bent part 52 is configured to connect to the first connection member 7. In this embodiment, the drive board 51 is a second circuit board, and has a conductive property, to implement a function of transmitting an electrical signal. The drive board 51 is a structure with enclosed square pattern, and includes a first side edge 511 and a second side edge 512 that are disposed opposite to each other in the second direction Y, and a third side edge 513 and a fourth side edge 514 that are disposed opposite to each other in the first direction X. Coils 53 are disposed on all the first side edge 511, the second side edge 512, the third side edge 513, and the fourth side edge 514, and the coils 53 on the four side edges form two coil groups that are perpendicularly disposed to each other.

The fastening member 6 includes a magnetic structure 61 and a stator 62. The stator 62 is a fastened frame in a structure with enclosed square pattern that is the same as that of the drive board 51. In this embodiment, the magnetic structures 61 are embedded on four side edges of the stator 62, to be disposed opposite to the coils 53 on the drive board 51, thereby forming two groups of magnetic fields perpendicular to each other. When the coil 53 is powered on, the coil 53 moves under an action of the magnetic field by a magnetic thrust, and drives the drive board 51 to move. In another embodiment, the magnetic structure 61 may also be fastened on the stator 62 in another manner, for example, bonding or clamping.

For example, one coil 53 is disposed on each side edge of the drive board 51. Coils 53 on the first side edge 511 and the second side edge 512 are configured to control the drive board 51 to move in the second direction Y, and coils 53 on the third side edge 513 and the fourth side edge 514 are configured to control the drive board 51 to move in the first direction X. When the coils 53 on the first side edge 511 and the second side edge 512 are supplied with currents in a same direction, and the coils 53 on the third side edge 513 and the fourth side edge 514 are not powered on, the coils 53 drive, under an action of a magnetic force, the drive board 51 to move in the second direction Y When the coils 53 on the first side edge 511 and the second side edge 512 are supplied with currents in opposite directions, and the coils 53 on the third side edge 513 and the fourth side edge 514 are not powered on, the coil 53 drives, under an action of a magnetic force, the drive board 51 to flip along a third direction Z, where the third direction Z is perpendicular to the first direction X and the second direction Y When the coils 53 on the third side edge 513 and the fourth side edge 514 are supplied with currents in a same direction, and the coils 53 on the first side edge 511 and the second side edge 512 are not powered on, the coils 53 drive, under an action of a magnetic force, the drive board 51 to move in the first direction X.

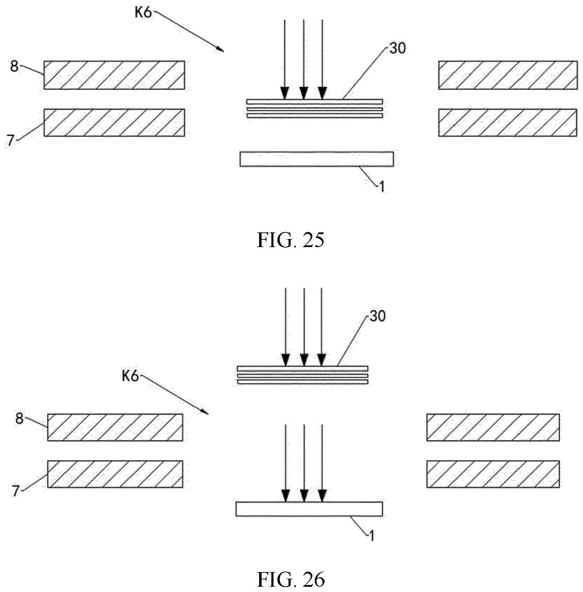

In some embodiments, refer to both FIG. 23 to FIG. 26. FIG. 24 is a schematic diagram of a connection structure of the first connection member 7 and the second connection member 8 shown in FIG. 23 in some embodiments. FIG. 24 and FIG. 25 are both schematic diagrams of connection structures of the first connection member 7 and the second connection member 8 shown in FIG. 23 in some other embodiments. Both the first connection member 7 and the second connection member 8 are hollow frame structures, and a light-transmitting region K6 is surrounded by the first connection member 7 and the second connection member 8. For example, as shown in FIG. 24, the light-transmitting region K6 is configured to accommodate the image sensor 1. As shown in FIG. 25, the light-transmitting region K6 is configured to accommodate an optical element, for example, an optical lens group 30, and the optical element is disposed on an incident light path of the image sensor 1. As shown in FIG. 26, a space in the light-transmitting region K6 is an optical path between the optical assembly and the image sensor 1.

FIG. 28 is a schematic diagram of a structure of the first connection member 7 shown in FIG. 23 in some embodiments. The first connection member 7 includes a first connection part 71, a second connection part 72, and a first elastic part 73. The first elastic part 73 is disposed between the first connection part 71 and the second connection part 72, and connects the first connection part 71 and the second connection part 72. The first connection part 71 includes a first connection plate 711, a second connection plate 712, a third connection plate 713, and a fourth connection plate 714. The first connection plate 711 and the second connection plate 712' are disposed opposite to each other, and the third connection plate 713' and the fourth connection plate 714' are disposed opposite to each other. The second connection part 72 includes a fifth connection plate 721', a sixth connection plate 722', a seventh connection plate 723', and an eighth connection plate 724'. The first connection plate 711 is located on a periphery of the fifth connection plate 721' and is disposed and spaced from the fifth connection plate 721' through a gap H1'. The second connection plate 712 is located on a periphery of the sixth connection plate 722' and is disposed and spaced from the sixth connection plate 722' through a gap H2'. The third connection plate 713 is located on a periphery of the seventh connection plate 723' and is disposed and spaced from the seventh connection plate 723' through a gap H3'. The fourth connection plate 714 is located on a periphery of the eighth connection plate 724' and is disposed and spaced from the eighth connection plate 724' through a gap H4'. The first connection part 71 and the second connection part 72 each are made of a closed outer edge and are in a hollow-out frame shape in the middle, so that the closed outer edge may be used for a fastened connection between the second connection parts 72, and the hollow-out structure in the middle directly faces the image sensor 1 and may be used for light transmission. In addition, the first connection part 71 and the second connection part 72 are disposed and spaced through a gap, so that problems such as motion interference and a circuit short circuit between the first connection part 71 and the second connection part 72 are avoided.

The first elastic part 73 includes a first elastic sub-part 731 and a second elastic sub-part 732. The first elastic sub-part 731 is located between the third connection plate 713 and the seventh connection plate 723', and connects the third connection plate 713 and the seventh connection plate 723'. The second elastic sub-part 732 is located between the fourth connection plate 714 and the eighth connection plate 724', and connects the fourth connection plate 714 and the eighth connection plate 724'. The first elastic sub-part 731 includes a first spring wire. A first end 733 of the first spring wire is connected to the first connection part 71, and a connection position of the first spring wire is a position that is of the first connection plate 711 and that is adjacent to the third connection plate 713. A second end 734' is connected to the sixth connection plate 722, and a connection position of the second end 734' is a position that is of the sixth connection plate 722 and that is adjacent to the seventh connection plate 723. The first body is disposed between the third connection plate 713 and the seventh connection plate 723, and the first body is in a strip shape and extends in the second direction Y This helps ensure stability of a direction of an elastic force and ensure the direction of the force. There are air gaps between the first body and both the third connection plate 713 and the seventh connection plate 723, to avoid motion interference between the first body and the first connection part 71. The first body includes a first segment 7351 extending in the second direction Y and a second segment 7352 extending in the first direction X. The first segment 7351 is connected to the second segment 7352, and the second segment 7352 is bent at a right angle relative to the first segment 7351. When the first elastic part 73 is subject to a thrust in the first direction X, the first segment 7351 is elastically deformed in the first direction X, and the second segment 7352 is rigid in the first direction X, so that the second connection part 72 and the first connection part 71 move relative to each other in the first direction X. The first spring wire includes the first segment 7351 and the second segment 7352 that are bent and connected, where the first segment 7351 is used for elastic deformation, and the second segment 7352 is used for fastening, so that a length of the first elastic part 73 in the first direction X is extended, a larger torque can be output, and driving efficiency is higher.

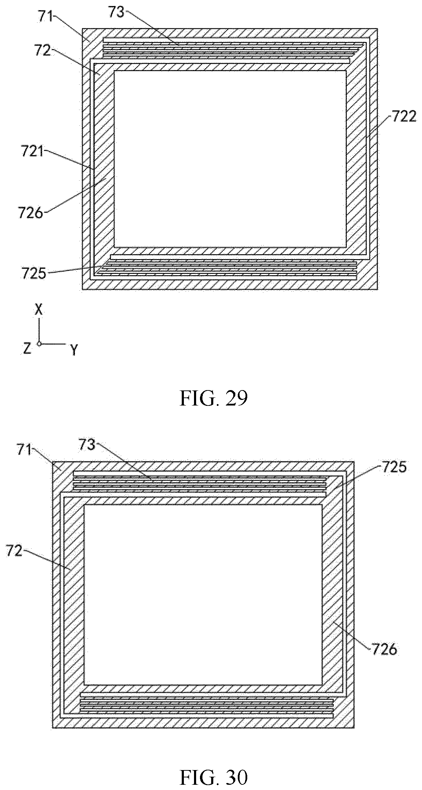

Refer to both FIG. 29 and FIG. 30. FIG. 29 is a schematic diagram of a structure of the first connection member 7 in some possible embodiments. FIG. 30 is a schematic diagram of a structure of the first connection member 7 in some other possible embodiments. The second connection part 72 includes a first connection body 726 and a first extension part 725. In this embodiment, a fifth connection plate 721 and a sixth connection plate 722 are used as an example for description. Both the two first connection bodies 726 and the two first extension parts 725 extend in the first direction X. An edge of a joint between the first extension part 725 and the first elastic part 73 is an oblique edge that is shown in FIG. 26 and that is inclined to the first direction X, or may be an edge that is shown in FIG. 27 and that is parallel to the first direction X. When the first extension part 725 is disposed on the second connection part 72, the second spring wire includes only the first segment 7351, and the first extension part 725 is configured to replace a rigid connection function of the second segment 7352. It may be understood that, in another embodiment, a quantity, a shape, and the like of the first extension parts 725 may be designed based on an actual requirement.

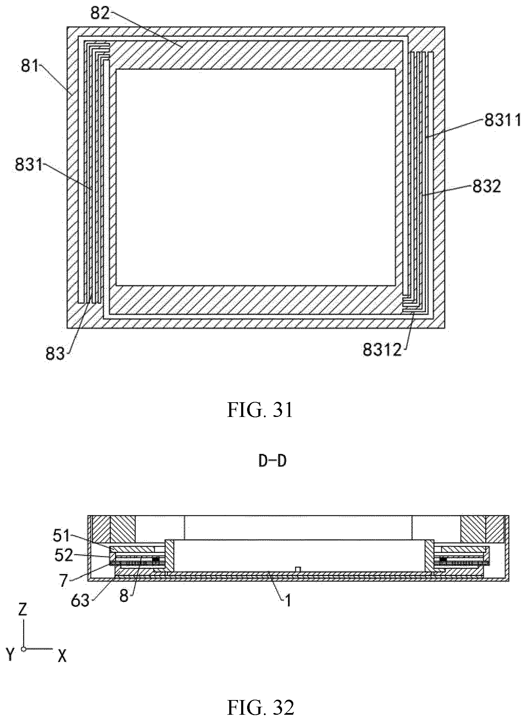

In some embodiments, refer to both FIG. 23 and FIG. 31. FIG. 31 is a schematic diagram of a structure of the second connection member 8 shown in FIG. 23 in some embodiments. The second connection member 8 is disposed between the first connection member 7 and the movable member 5. The second connection member 8 includes a third connection part 81, a fourth connection part 82, and a second elastic part 83. Both the third connection part 81 and the fourth connection part 82 are made of a closed outer edge and are in a hollow-out frame shape in the middle. The second elastic part 83 is disposed between the third connection part 81 and the fourth connection part 82, and is connected to the third connection part 81 and the fourth connection part 82. The second elastic part 83 includes a third elastic sub-part 831 and a fourth elastic sub-part 832. A first segment 8311 of the third elastic sub-part 831 extends in the first direction X, a second segment 8312 extends in the second direction Y, and the third elastic sub-part 831 and the fourth elastic sub-part 832 are symmetrically disposed on two sides of the fourth connection part 82 in the second direction Y A structure of the third elastic sub-part 831 and a structure of the fourth elastic sub-part 832 are the same as the structure of the first elastic part 73. For details, refer to the structure of the first elastic part 73. Details are not described herein again.

When the second elastic part 83 is subject to a thrust in the second direction Y, the first segment 8311 is elastically deformed in the second direction Y, and the second segment 8312 is rigid in the second direction Y, so that the fourth connection part 82 and the third connection part 81 move relative to each other in the second direction Y Two second elastic parts 83 are disposed, and the two second elastic parts 83 are respectively disposed on two opposite sides of the fourth connection part 82 in the second direction Y, so that interaction acting forces between the third connection part 81 and the fourth connection part 82 may be more uniform and symmetric, and relative motion between the third connection part 81 and the fourth connection part 82 is more balanced.

In another embodiment, the fourth connection part 82 may further include a second connection body and a second extension part. For quantities and structures of the second connection body and the second extension part, refer to quantities and structures of the first connection body and the first extension part of the first connection member 7.

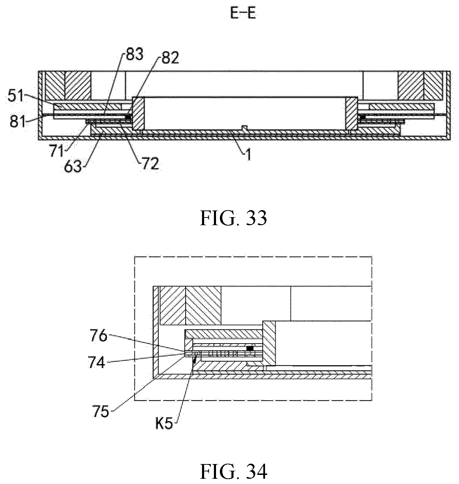

Refer to both FIG. 22, FIG. 32, and FIG. 33. FIG. 32 is a schematic diagram of a structure obtained after the structure in FIG. 22 is cut along D-D. FIG. 33 is a schematic diagram of a structure obtained after the structure in FIG. 22 is cut along E-E. The second connection member 8 and the first connection member 7 are stacked. The movable member 5 includes a bent part 52. The bent part 52 extends from the drive board 51 to a side on which the first connection member 7 is located. There are two bent parts 52. The two bent parts 52 are symmetrically disposed on two sides of the drive board 51 in the second direction Y The first connection member 7 and the bent part 52 are connected and enclosed to form a receptacle with openings at two ends, and the two openings are at two sides of the drive board 51 in the first direction X. The second connection member 8 is disposed in the receptacle, and is connected to the middle frame 42 through openings at the two ends of the receptacle. In the solutions shown in FIG. 32 and FIG. 33, the first connection member 7, the bent part 52, and the drive board 51 are jointly enclosed to form an accommodation space, the second connection member 8 is disposed in the accommodation space, and the fastening member 6 is located on a side that is of the drive board 51 and that is away from the second connection member 8. In this solution, the second connection member 8 is disposed in the accommodation space, and the fastening member 6 is located on the side that is of the drive board 51 and that is away from the second connection member 8, so that a structure of the optical image stabilization apparatus is more compact, and an overall volume of the optical image stabilization apparatus is reduced.

In Embodiment 2, the first connection part 71 is disposed on a periphery of the second connection part 72, and the third connection part 81 is disposed on a periphery of the fourth connection part 82. The first connection part 71 is fastened to the bent part 213, the second connection part 72 is fastened to the fourth connection part 82, and the third connection part 81 is fastened to the middle frame 42. When the drive board 51 moves in the first direction X, the bent part 213 drives the first connection part 71 to move in the first direction X. Because the second elastic part 83 is rigid in the first direction X, and the third connection part 81 is fastened to the middle frame 42, the entire second connection member 8 remains fastened, and the second connection part 72 remains fastened by being fastened to the fourth connection part 82. In this case, the first elastic part 73 deforms in the first direction X, the first connection part 71 and the second connection part 72 move relative to each other in the first direction X. When the drive board 51 moves in the second direction Y, the bent part 213 drives the first connection part 71 to move in the second direction Y Because the first elastic part 73 is rigid in the second direction Y, the bent part 213 drives the entire first connection member 73 to move in the second direction Y The second connection part 72 drives the fourth connection part 82 to move in the second direction Y The third connection part 81 is relatively fastened to the fastening member 6, in this case, the second elastic part 83 is deformed in the second direction Y, so that the fourth connection part 82 and the third connection part 81 move relative to each other in the second direction Y In addition, a side that is of the first connection member 7 and that is away from the drive board 51 is fastened to the first circuit board 63. When the drive board 51 drives the first connection part 71 to move, the first connection part 71 drives the first circuit board 63 to move synchronously, thereby achieving an objective of moving the image sensor 1.

Similarly, the second connection part 72 may also be disposed on a periphery of the first connection part 71, and the fourth connection part 82 may be disposed on a periphery of the third connection part 81. For a specific connection structure, refer to the description in Embodiment 1. Details are not described herein again.

In some embodiments, refer to FIG. 33 and FIG. 34. FIG. 34 is a schematic diagram of a partial structure of the optical image stabilization apparatus 40 shown in FIG. 22 in some embodiments. The first connection member 7 includes a first substrate 74, a first line layer 75, and a third line layer 76. The first line layer 75 and the third line layer 76 are respectively disposed on two surfaces that are facing backwards and that are on the first substrate 74, a first electric trace is disposed on the first line layer 75, and a second electric trace is disposed on the third line layer 76. The first substrate 74 is provided with a conductive through hole K5. The conductive through hole K5 penetrates through the first line layer 75, the first substrate 74, and the third line layer 76. The conductive through hole K5 is coated with an insulation layer, and then is filled with a conductive material. The insulation layer is used to insulate the conductive material from the first substrate 74, and the conductive material is used to implement electrical connection between the first line layer 75 and the third line layer 76. The electrical signal of the image sensor 1 is transmitted to the fourth connection part 82 through the first circuit board 63, the movable member 5, the first line layer 75, and the third line layer 76 in sequence, and then is transmitted to the external circuit through the second elastic part 83 and the third connection part 81 in sequence.

The foregoing descriptions are merely specific implementations of this application, but the protection scope of this application is not limited thereto. Any person skilled in the art can easily conceive modifications or replacements within the technical scope of this application, and these modifications or replacements shall fall within the protection scope of this application. When there is no conflict, embodiments of this application and the features in embodiments may be mutually combined. Therefore, the protection scope of this application shall be subject to the protection scope of the claims.

## Claims

1. An optical image stabilization apparatus, comprising:
an image sensor;
a drive assembly, comprising a fastening member and a movable member that are capable of moving relative to each other, wherein the movable member is fastened to the image sensor, the fastening member and the movable member cooperate to drive the image sensor to move in a first direction and a second direction, and the first direction and the second direction are disposed in an included angle;
a first connection member, comprising a first connection part, a second connection part, and a first elastic part, wherein the first elastic part is connected between the first connection part and the second connection part, the first elastic part is configured to implement relative movement between the first connection part and the second connection part in the first direction, and the first connection part is fastened to the movable member; and
a second connection member, stacked with the first connection member, wherein the second connection member comprises a third connection part, a fourth connection part, and a second elastic part, the second elastic part is connected between the third connection part and the fourth connection part, the second elastic part is configured to implement relative movement between the third connection part and the fourth connection part in the second direction, the third connection part is fastened to the fastening member, and the fourth connection part is fastened to the second connection part.

2. The optical image stabilization apparatus according to claim 1, wherein the first connection part is located on a periphery of the second connection part, and the third connection part is located on a periphery of the fourth connection part.

3. The optical image stabilization apparatus according to claim 1, wherein the second connection part is located on a periphery of the first connection part, and the fourth connection part is located on a periphery of the third connection part.

4. The optical image stabilization apparatus according to any one of claims 1 to 3, wherein the first elastic part comprises at least one first spring wire, the first spring wire comprises a first end connected to the first connection part, a second end connected to the second connection part, and a first body connected between the first end and the second end, the first body is disposed and spaced from both the first connection part and the second connection part through gaps, and an extension distance of the first body in the second direction is greater than or equal to an extension distance of the image sensor in the second direction.

5. The optical image stabilization apparatus according to claim 4, wherein the first body comprises a first segment and a second segment, the second segment is bent and extended relative to the first segment, the first end is an end part that is of the first segment and that is away from the second segment, the second end is an end part that is of the second segment and that is away from the first segment, and the first segment extends in the second direction.

6. The optical image stabilization apparatus according to claim 4, wherein the first body is in a straight strip shape and extends in the second direction, and two ends of the first body are respectively connected to the second connection part and the first connection part.

7. The optical image stabilization apparatus according to claim 2, wherein there are two first elastic parts, and the two first elastic parts are respectively disposed on two sides of the second connection part in the first direction.

8. The optical image stabilization apparatus according to claim 7, wherein an outer edge of the second connection part comprises a first edge, a second edge, a third edge, and a fourth edge that are connected in sequence and in a closed frame shape, the first edge and the second edge are disposed opposite to each other, and the third edge and the fourth edge are disposed opposite to each other; and the first connection part comprises a first connection plate and a second connection plate, the first connection plate is located on a periphery of the first edge and is disposed and spaced from the first edge through a gap, the second connection plate is located on a periphery of the third edge and is disposed and spaced from the third edge through a gap, one first elastic part is located on the periphery of the third edge and is connected between the second connection plate and the second connection part, and the other first elastic part is located on a periphery of the fourth edge and is connected between the first connection plate and the second connection part.

9. The optical image stabilization apparatus according to claim 8, wherein a position at which the first elastic part is connected to the second connection part is a position that is on the third edge and that is adjacent to the first edge, and a position at which the other first elastic part is connected to the second connection part is a position that is on the fourth edge and that is adjacent to the second edge.

10. The optical image stabilization apparatus according to claim 8, wherein regions between the first connection plate and the second connection plate comprise a first region and a second region that are adjacently disposed in the first direction, the second connection part and the two first elastic parts are located in the first region, the second region is used to accommodate an optical element, and the optical element is configured to transmit incident light to the image sensor.

11. The optical image stabilization apparatus according to claim 10, wherein the optical element is a light conversion component, and the optical element is configured to reflect the incident light to the image sensor.

12. The optical image stabilization apparatus according to claim 10, wherein regions surrounded by the third connection part comprise a third region and a fourth region that are adjacently disposed in the first direction, the fourth connection part comprises a second connection body and a second extension part, the second connection body and the second connection part are stacked and fastened, the second connection body is located in the third region, a part of the second extension part is located in the fourth region, a part of the second elastic part is located in the third region, a part of the second elastic part is in the fourth region, and the fourth region and the second region are disposed opposite to each other in a stacking direction.

13. The optical image stabilization apparatus according to claim 12, wherein the third connection part is an unclosed frame-shaped structure, the third connection part comprises a notch, and in the first direction, the fourth region is located between the notch and the third region.

14. The optical image stabilization apparatus according to claim 7, wherein both the first connection member and the second connection member are hollow frame structures, and a light-transmitting region is surrounded by the first connection member and the second connection member; the first connection part, the first elastic part, and the second connection part are located on a periphery of the light-transmitting region; the third connection part, the second elastic part, and the fourth connection part are located on the periphery of the light-transmitting region; and the light-transmitting region is configured to accommodate the image sensor.

15. The optical image stabilization apparatus according to claim 7, wherein both the first connection member and the second connection member are hollow frame structures, and a light-transmitting region is surrounded by the first connection member and the second connection member; the first connection part, the first elastic part, and the second connection part are located on a periphery of the light-transmitting region; the third connection part, the second elastic part, and the fourth connection part are located on the periphery of the light-transmitting region; and the light-transmitting region is configured to accommodate an optical element, and the optical element is disposed on an incident optical path of the image sensor.

16. The optical image stabilization apparatus according to claim 7, wherein both the first connection member and the second connection member are hollow frame structures, and a light-transmitting region is surrounded by the first connection member and the second connection member; the first connection part, the first elastic part, and the second connection part are located on a periphery of the light-transmitting region; the third connection part, the second elastic part, and the fourth connection part are located on the periphery of the light-transmitting region; and a space in the light-transmitting region is an optical path between an optical element and the image sensor.

17. The optical image stabilization apparatus according to any one of claims 1 to 16, wherein the first connection member comprises a first electric trace, and the first electric trace enables the first connection part, the first elastic part, and the second connection part to be electrically connected in sequence; the second connection member comprises a second electric trace, and the second electric trace enables the fourth connection part, the second elastic part, and the third connection part to be electrically connected in sequence; and the first connection part is electrically connected to the image sensor, the first electric trace is electrically connected to the second electric trace, and the third connection part is configured to be electrically connected to an external circuit board.

18. The optical image stabilization apparatus according to claim 17, wherein the first connection member comprises a first substrate and a first line layer that are stacked, and the first electric trace is disposed at the first line layer; the second connection member comprises a second substrate and a second line layer that are stacked, and the second electric trace is disposed at the second line layer; and the first substrate and the second substrate are adjacently disposed and fastened.

19. The optical image stabilization apparatus according to claim 17, wherein the first connection member comprises a first substrate and a first line layer that are stacked, and the first electric trace is disposed at the first line layer; the second connection member comprises a second substrate and a second line layer that are stacked, and the second electric trace is disposed at the second line layer; and the first line layer and the second line layer are adjacently disposed and fastened.

20. The optical image stabilization apparatus according to any one of claims 17 to 19, wherein a coil is disposed on the movable member, the fastening member is provided with a magnetic structure, the magnetic structure is disposed opposite to the coil, and the coil is powered on and cooperates with the magnetic structure, to drive the image sensor to move in the first direction or the second direction.

21. The optical image stabilization apparatus according to claim 20, wherein the movable member comprises a drive board and a bent part, the coil is disposed on the drive board, the bent part is connected to a pair of oppositely disposed edge positions on the drive board, and the first connection member is fastened to an edge that is of the bent part and that is away from the drive board.

22. The optical image stabilization apparatus according to claim 21, wherein the first connection member, the bent part, and the drive board are jointly enclosed to form an accommodation space, the fastening member is located in the accommodation space, and the second connection member is located on a side that is of the first connection member and that is away from the fastening member.

23. The optical image stabilization apparatus according to claim 21, wherein the first connection member, the bent part, and the drive board are jointly enclosed to form an accommodation space, the second connection member is disposed in the accommodation space, and the fastening member is located on a side that is of the drive board and that is away from the second connection member.

24. A camera module, comprising a module frame, a lens assembly, and the optical image stabilization apparatus according to any one of claims 1 to 23, wherein both a lens and the optical image stabilization apparatus are installed in the module frame.

25. An electronic device, comprising a processor and the camera module according to claim 24, wherein the processor is electrically connected to the camera module, and the processor is configured to process an image signal output by an image sensor.
